# EUROPEAN PATENT APPLICATION

(11) **EP 4 451 172 A1**
(43) Date of publication of application: **23.10.2024**
(21) Application number: 22921622.1
(22) Date of filing: 18.11.2022
(51) Int. Cl.: G06K 7/10

(54) **COMMUNICATION METHOD, APPARATUS AND SYSTEM**

(30) Priority: 20.01.2022 CN 202210068547
(71) Applicant: Huawei Technologies Co., Ltd., Shenzhen, Guangdong 518129 (CN)
(72) Inventor: ZONG, Zaifeng, Shenzhen, Guangdong 518129 (CN); ZHENG, Xiaochun, Shenzhen, Guangdong 518129 (CN); ZHOU, Xiaoyun, Shenzhen, Guangdong 518129 (CN); LIAO, Ting, Shenzhen, Guangdong 518129 (CN)
(74) Representative: Pfenning, Meinig & Partner mbB
(86) International application number: PCT/CN2022/132921
(87) International publication number: WO 2023/138198

(57) **Abstract**

Embodiments of this application provide a target terminal management method, apparatus, and system. The method includes: A tag management function network element sends a first instruction to an access network device, where the first instruction includes information about a target terminal, the target terminal includes a first terminal, and the first instruction instructs the access network device to perform a first operation on the target terminal; and the tag management function network element receives a result of the first operation, where the result of the first operation includes an identifier of the first terminal. According to the foregoing method, load of an application service function network element can be reduced. In addition, an application scope of a passive internet of things technology can further be expanded, and a wider range of application scenarios are provided.

## Description

This application claims priority to Chinese Patent Application No. 202210068547.X, filed with the China National Intellectual Property Administration on January 20, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

A passive internet of things (Passive Internet of Thing, Passive IoT) technology is a representative technology of internet of things technologies. The passive internet of things technology may be used to implement, but is not limited to, a technology similar to a radio frequency identification (Radio Frequency Identification, RFID) technology. Currently, different enterprises may deploy their own private reader/writer in an access network device. The enterprises may set up an application server depending on their own requirements, and deliver an instruction to a reader in a base station through the application server, to finally implement application of the passive internet of things technology. However, the current passive internet of things technology is only applicable to enterprise-based application scenarios, and application scopes and application scales of the passive internet of things technology are limited due to personalized and private requirements of the enterprises.

### SUMMARY

This application provides a communication method, apparatus, and system.

According to a first aspect, an embodiment of this application provides a communication method. The method is performed by a tag management function network element. The method includes: The tag management network element sends a first instruction to an access network device, where the first instruction includes information about a target terminal, the target terminal includes a first terminal, and the first instruction instructs the access network device to perform a first operation on the target terminal; and the tag management function network element receives a result of the first operation, where the result of the first operation includes an identifier of the first terminal. According to the method, load of an application service function network element can be reduced. In addition, an application physical scope of a current passive internet of things technology is expanded and a wider range of scenarios are provided because the tag management function network element may be deployed in a core network, and the tag management function network element may establish connections to a plurality of access network devices.

It should be understood that the first instruction instructs the access network device to perform the first operation on the target terminal corresponding to the information about the target terminal. Specifically, the first operation triggers the first terminal in the target terminal to send the identifier of the first terminal. When the access network device performs the first operation on the target terminal, it may be specifically understood that inventory is performed on the target terminal first, so that at least one terminal in the target terminal feeds back an identifier of the terminal. The foregoing procedure may also be understood as a random access process of the target terminal.

In a possible implementation, before that the tag management network element sends a first instruction to an access network device, the method further includes: The tag management function network element receives a first request, where the first request includes first information; the tag management function network element determines a first operation based on the first request; and the tag management function network element determines the access network device based on the first information.

In a possible implementation, the first information includes the information about the target terminal and/or first area information.

In a possible implementation, the first area information includes at least one of the following: an area identifier, a tracking area identifier, a tracking area list, an identifier of an access and mobility management function network element, an identifier of the access network device, and a cell identity.

In a possible implementation, the method further includes: The tag management function network element determines an access and mobility management function network element corresponding to the access network device; and that the tag management function network element sends a first instruction to an access network device includes: The tag management function network element sends the first instruction to the access network device through the access and mobility management function network element corresponding to the access network device.

In a possible implementation, the first request further includes an association identifier. The method further includes: The tag management function network element sends the association identifier to the access network device. The result of the first operation further includes the association identifier.

In a possible implementation, the information about the target terminal includes at least one of the following: an identifier of the target terminal, a group identifier of a target terminal group, status information of the target terminal, an identifier range of the target terminal, mask information of the target terminal, identification information of a user of the target terminal, or identification information of an application to which the target terminal belongs.

In a possible implementation, the method further includes: The tag management function network element receives a second request, where the second request is used to request the first operation; and the tag management function network element sends the received result of the first operation.

In a possible implementation, the method further includes: The tag management function network element receives a third request, where the third request includes a second operation; the tag management function network element determines that there is no access network device configured to perform the second operation; and the tag management function network element sends a failure response, where the failure response indicates that the second operation fails to be performed.

In a possible implementation, the method further includes: The tag management function network element obtains capability information of one or more access network devices, where the capability information indicates whether the one or more access network devices are capable of performing the second operation; and that the tag management function network element determines that there is no access network device configured to perform the second operation includes: The tag management function network element determines, based on the first information and the capability information, that there is no access network device configured to perform the second operation.

In a possible implementation, the first instruction further includes first indication information. The first indication information indicates the access network device to wait for a second instruction of the tag management network element after completing the first operation on the first terminal. It may be understood that the second instruction may be to perform the first operation on a second terminal of the target terminal, or may be to end execution of the first instruction.

In a possible implementation, the method further includes: The tag management network element sends the second instruction to the access network device, so that the access network device performs the first operation on the second terminal.

In a possible implementation, the method further includes: The tag management function network element determines a third operation based on the first request; after receiving the result of the first operation performed on a first tag, the tag management function network element sends the third operation to the first terminal through the access network device; and the tag management function network element receives a result of the third operation. It should be understood that the third operation may be performed based on a first parameter. Specifically, the first parameter is situation-dependent. For example, when the first instruction is read, the first parameter may include specific to-be-read location information; or when the first instruction is write, the first parameter may include information that should be written and specific to-be-written location information. The location information is information about an area in which data is stored in the target terminal. It should be further understood that, the time at which the tag management function network element determines, based on the first request, to perform the third operation may be the same as or different from the time at which the result of the first operation performed on the first tag is received. A sequence is not limited. It may be further understood that the third operation may include a plurality of operations. The tag management function network element may send a plurality of instructions to the first terminal through the access network device. This is not limited in this application. The result of the third operation includes at least one of the following: an electronic product code, a cyclic redundancy check, a protocol control code, data field information of the target terminal, and acknowledgment information of the first operation.

In a possible implementation, the target terminal further includes a second terminal. The method further includes: The first instruction further includes second indication information, and the second indication information indicates the access device to perform the first operation on the second terminal after completing the first operation on the first terminal.

In a possible implementation, the method further includes: The tag management function network element receives third indication information from the access network device; and the tag management function network element learns, based on the third indication information, that the first operation performed by the access network device on the target terminal is completed.

In a possible implementation, the method further includes: The tag management function network element sends the result of the first operation to a network exposure function network element or an application function network element. The result of the first operation includes at least one of the following: the electronic product code, the cyclic redundancy check, and the protocol control code.

In a possible implementation, the first operation includes at least one of the following: inventory, read, write, kill, lock, blockwrite, blockerase, access, encryption, and decryption.

In a possible implementation, the access network device or the access and mobility management function network element or both serve the target terminal.

According to a second aspect, an embodiment of this application provides a communication method. The method is performed by an access network device. The method includes: The access network device receives a first instruction from a tag management network element, where the first instruction includes information about a target terminal, and the target terminal includes a first terminal; the access network device performs a first operation based on the first instruction; and the access network device sends a result of the first operation to the tag management function network element, where the result of the first operation includes an identifier of the first terminal. According to the foregoing solution, the access network device may activate the target terminal by using the first instruction and perform the first operation, and may directly communicate with the tag management function network element. This improves process convenience.

In a possible implementation, the first instruction further includes first indication information. After that the access network device performs a first operation on the first terminal, the method further includes: The access network device waits for a second instruction of the tag management network element based on the first indication information.

In a possible case, the target terminal includes a second terminal. The method further includes: The access network device receives the second instruction from the tag management network element; and the access network device performs the first operation on the second terminal based on the second instruction. For the second instruction, refer to the descriptions of the second instruction in the first aspect. Details are not described again.

In a possible implementation, the first instruction further includes second indication information. After that the access network device performs a first operation on the first terminal, the method further includes: The target terminal further includes a second terminal, and the access device performs the first operation on the second terminal based on the second indication information.

In a possible implementation, the result of the first operation includes an identifier of the second terminal. It should be understood that there may be one or more second terminals. In other words, that the access network device sends a result of the first operation to the tag management function network element is to send the result of the first operation to the tag management function network element after results corresponding to a plurality of terminals (for example, the first terminal and at least one second terminal) of the target terminal are collected.

According to a third aspect, an embodiment of this application provides a communication method. The method is performed by an access and mobility management function network element. The method includes: The access and mobility management function network element receives first information from a tag management function network element, where the first information is used to determine a target terminal; the access and mobility management function network element determines an access network device corresponding to the target terminal based on the first information; and the access and mobility management function network element sends a fifth request to the access network device, where a second request and the fifth request include an indication of a first operation. According to the foregoing solution, the access and mobility management function network element determines the access network device and the target terminal based on the first information. Alternatively, the access and mobility management function network element may determine the access network device based on a destination address corresponding to the second request, and finally the access and mobility management function network element sends a request to the access network device, where the request is used to perform the first operation on the target terminal.

In a possible implementation, that the access and mobility management function network element sends a fifth request to the access network device includes: The access and mobility management function network element sends a first message to the access network device, where the first message includes the fifth request. Alternatively, there are a plurality of access network devices, and the access and mobility management function network element separately sends the first message to the plurality of devices, where the first message includes the fifth request. In other words, the access and mobility management function network element directly forwards the first message. When there are a plurality of access network devices, the plurality of access network devices receive the same first message. In this case, the first message includes content related to all access network devices involved in the fifth request. After receiving the first message, each access network device needs to specifically identify content related to the access network device. Alternatively, the access and mobility management function network element identifies and parses the fifth request, distinguishes content that is in the fifth request and that is related to different access network devices, and sends the content to the corresponding access network device in a form of the first message. Finally, the content received by each access network device is content related to the access network device, and there is no content related to another access network device. Alternatively, the access and mobility management function network element sends the first message to an access network device corresponding to the destination address based on the destination address corresponding to the second request. Alternatively, the access and mobility management function network element broadcasts the first message to an access network device in a network.

In a possible implementation, the first information includes first area information. The first area information includes at least one of the following: an area identifier, a tracking area identifier, a tracking area list, and a cell identity. If the first area information includes the cell identity, the fifth request includes the cell identity.

In a possible implementation, the method according to the aspect further includes: The access and mobility management function network element receives a result of the first operation from the access network device; the access and mobility management function network element integrates the result of the first operation; and the access and mobility management function network element sends an integrated result of the first operation to the tag management function network element.

In a possible implementation, a first request and the result of the first operation include an association identifier. The association identifier is used to associate the first operation with the result of the first operation.

In a possible implementation, the first information includes information about the target terminal, and the first request is used to request to perform the first operation on the target terminal. The information about the target terminal includes at least one of the following: an identifier of the target terminal, a group identifier of a target terminal group, identification information of a user of the target terminal, or identification information of an application to which the target terminal belongs. The indication of the first operation indicates to perform the first operation on the target terminal corresponding to the information about the target terminal.

In a possible case of this implementation, that the access and mobility management function network element determines, based on the first information, an access network device corresponding to the target terminal includes: The access and mobility management function network element determines the access network device corresponding to the target terminal based on the first information and the information about the target terminal.

According to a fourth aspect, an embodiment of this application provides a communication method. The method is performed by a network exposure function network element. The method includes: The network exposure function network element receives information about a target terminal of a first operation; and the network exposure function network element sends a first request to a tag management function network element based on the information about the target terminal, where the first request includes identification information of the target terminal. According to the method, the network exposure function network element translates the information about the target terminal into the identification information of the target terminal. This helps the tag management function network element identify the target terminal.

In a possible implementation, the information about the target terminal includes at least one of the following: an identifier of the target terminal, a group identifier of a terminal group to which the target terminal belongs, identification information of a user of the target terminal, or identification information of an application to which the target terminal belongs.

According to a fifth aspect, an embodiment of this application provides a communication method. The method is performed by a tag management function network element. The method includes: The tag management function network element receives a first request, where the first request includes an indication of a first operation and first information; the tag management function network element determines an access network device and/or an access and mobility management function network element based on the first information; the tag management function network element sends the indication of the first operation to the access network device and/or the access and mobility management function network element; and the tag management function network element receives a result of the first operation. According to the foregoing solution, the tag management function network element receives and parses information in the first request, determines an access network device configured to perform the first operation, and obtains the result of the first operation. This can reduce load of an application service function network element. In addition, an application physical scope of a current passive internet of things technology is expanded and a wider range of scenarios are provided because the tag management function network element may be deployed in a core network, and the tag management function network element may establish connections to a plurality of access network devices.

It should be understood that there may be one or more access network devices. That the tag management function network element sends the indication of the first operation to the access network device may be understood as that the tag management function network element separately sends the indication of the first operation to a plurality of access network devices.

The foregoing descriptions are also applicable to a method provided in another aspect of this application. Details are not described again.

In a possible implementation, the first information includes first area information. The first area information includes at least one of the following: an area identifier, a tracking area identifier, a tracking area list, an identifier of the access and mobility management function network element, an identifier of the access network device, and a cell identity. The tracking area identifier is used to identify a tracking area in which the access network device is located. The tracking area list includes the tracking area identifier. The cell identity is used to identify a cell that is in the access network device and that corresponds to a target terminal. The area identifier is used to identify an area in which the access network device is located. There is a correspondence between the area identifier and the tracking area identifier. There is a correspondence between the area identifier and the tracking area list. There is a correspondence between the area identifier and the cell identity. In addition, the first area information may further include information indicating a geographical location. It should be understood that a correspondence between the information indicating the geographical location and an access network device corresponding to the information or an access and mobility management function network element corresponding to the information may be obtained in the tag management function network element.

The target terminal may be a terminal of a passive internet of things. Specifically, the terminal may be a tag, for example, a passive tag or a semi-passive tag. Alternatively, the target terminal may be a terminal device having a terminal feature of the passive internet of things. It should be understood that there may be one or more target terminals. The foregoing descriptions are also applicable to a method provided in another aspect of this application. Details are not described again.

In a possible implementation, the tag management function network element determines the access network device corresponding to the target terminal and/or the access and mobility management function network element corresponding to the target terminal based on the first area information.

In a possible implementation, the first request further includes an association identifier. The method further includes: The tag management function network element further sends the association identifier to the access network device and/or the access and mobility management function network element. The result of the first operation further includes the association identifier.

It should be understood that, during actual application, an association identifier related to an operation and an association identifier of a response message related to the same operation between two network elements should be consistent.

In a possible implementation, the first information includes information about the target terminal, and the first request is used to request to perform the first operation on the target terminal. The information about the target terminal includes at least one of the following: an identifier of the target terminal, a group identifier of a target terminal group, identification information of a user of the target terminal, or identification information of an application to which the target terminal belongs. The indication of the first operation indicates to perform the first operation on the target terminal corresponding to the information about the target terminal.

In a possible implementation, that the tag management function network element receives a result of the first operation includes: The tag management function network element receives the result of the first operation from the target terminal. In other words, there is an interface between the tag management function network element and the target terminal, and the tag management function network element may receive the result of the first operation from the target terminal over the interface.

In a possible implementation, that the tag management function network element determines an access network device and/or an access and mobility management function network element based on the first information includes: The tag management function network element determines the access network device corresponding to the target terminal and/or the access and mobility management function network element corresponding to the target terminal based on the information about the target terminal.

Specifically, in a case of this implementation, when the tag management function network element determines an access network device based on the first information, the tag management function network element determines an access and mobility management function network element corresponding to the access network device; and that the tag management function network element sends the indication of the first operation to the access network device includes: The tag management function network element sends the indication of the first operation to the access network device through the access and mobility management function network element corresponding to the access network device.

Specifically, in another case of this implementation, when the tag management function network element determines an access network device and an access and mobility management function network element based on the first information, that the tag management function network element sends the indication of the first operation to the access network device and the access and mobility management function network element includes: The tag management function network element sends the indication of the first operation to the access and mobility management function network element, so that the mobility management network element sends the indication of the first operation to the access network device.

Specifically, in still another case of this implementation, when the tag management function network element determines an access and mobility management function network element based on the first information, that the tag management function network element sends the indication of the first operation to the access network device includes: The tag management function network element sends the indication of the first operation to the access network device through the access and mobility management function network element.

In a possible implementation, the method described in the aspect further includes: The tag management function network element receives a second request, where the second request is used to perform the first operation; and the tag management function network element sends the obtained result of the first operation. For example, the result of the first operation may include feedback information about whether the first operation is successfully performed.

In a possible implementation, the method described in the aspect further includes: The tag management function network element receives a third request, where the third request includes a second operation; the tag management function network element determines that there is no access network device configured to perform the second operation; and the tag management function network element sends a termination request, where the termination request is used to request to terminate the second operation.

In a possible case, the method further includes: the tag management function network element obtains capability information of one or more access network devices. The capability information indicates whether the one or more access network devices are capable of performing the second operation. That the tag management function network element determines that there is no access network device configured to perform the second operation includes: The tag management function network element determines, based on the capability information, that there is no access network device configured to perform the second operation.

In another possible case, the method further includes: The tag management function network element obtains a correspondence between the result of the first operation and the access network device, and/or a correspondence between the result of the first operation and the access and mobility management function network element. That the tag management function network element determines that there is no access network device configured to perform the second operation includes: The tag management function network element determines, based on the correspondence between the result of the first operation and the access network device and/or the correspondence between the result of the first operation and the access and mobility management function network element, that there is no access network device configured to perform the second operation.

In a possible implementation, the tag management function network element sends the indication of the first operation to the access network device and/or the access and mobility management function network element includes: The tag management function network element determines a third operation based on the first request; the tag management function network element sends a fourth request to the access network device, where the fourth request is used to request to perform the third operation on the target terminal; the tag management function network element and receives a result of the third operation; and the tag management function network element sends the indication of the first operation to the access network device and/or the access and mobility management function network element based on the result of the third operation. In other words, after obtaining the result of the third operation, the tag management function network element determines a specific target terminal on which the first operation can be performed, and then sends the indication of the first operation. In other words, execution of the first operation may depend on the result of the third operation. For example, when the first operation is a read operation, and the third operation is an inventory operation, if the tag management function network element has never obtained a result of an inventory operation of a target terminal corresponding to the read operation, the tag management function network element first performs the inventory operation of the target terminal, and then performs the read operation. It should be understood that this aspect further includes another manner. For example, if the first operation needs to be performed based on the result of the third operation, and the third operation needs to be performed based on a result of a seventh operation, the tag management function network element may first perform the seventh operation, then perform the third operation, and finally perform the first operation, to finally obtain the result of the first operation. In addition, it should be understood that the access network device that performs the third operation and the access network device that performs the first operation may be different access network devices. In this case, the access network device that performs the third operation may further send the result obtained by the third operation to the access network device that performs the first operation. For example, the access network device that performs the third operation may send, through the tag management function network element, the result obtained by the third operation to the access network device that performs the first operation.

In a possible implementation, the method described in the aspect further includes: The tag management function network element sends the result of the first operation to a network exposure function network element or an application function network element. It should be understood that the tag management function network element may obtain results of other obtained operations, for example, the second operation and the third operation in other implementations.

In a possible implementation, the result of the first operation includes at least one of the following: an electronic product code, a cyclic redundancy check, a protocol control code, data field information of the target terminal, and acknowledgment information of the first operation.

In a possible implementation, the first operation includes at least one of the following: inventory, read, write, kill, lock, blockwrite, blockerase, access, encryption, and decryption. In addition, the first operation may further include another operation, such as select, query, ACK, NAK, Req_RN, timeout, and invalid. "At least one" should be understood as one or more. To be specific, the first operation includes one or more of operations such as inventory, read, write, kill, lock, blockwrite, blockerase, access, encryption, and decryption. It should be understood that inventory in this application may also be referred to as stocktaking, and the descriptions are also applicable to descriptions of other aspects of this application. Details are not described again.

In a possible implementation, that the tag management function network element determines an access network device based on the first information includes: The tag management function network element obtains capability information of one or more access network devices; and the tag management function network element determines the access network device corresponding to the target terminal based on the first information and the capability information. Alternatively, if the capability information includes a correspondence between an access network device and an access and mobility management function network element, the tag management function network element may further determine the access network device corresponding to the target terminal and the access and mobility management function network element corresponding to the access network device based on the capability information.

It should be understood that if the tag management function network element determines only the access and mobility management function network element, the tag management function network element sends the second request to the access and mobility management function network element; or if the tag management function network element determines the access network device, the tag management function network element may further determine the access and mobility management function network element, and finally, the tag management function network element sends the second request to the access network device, or further sends the second request to the access network device through the access and mobility management function network element.

In addition, the tag management function network element may alternatively determine the access network device corresponding to the target terminal and/or the access and mobility management function network element corresponding to the target terminal based on only the capability information. When the first information does not include information indicating area information of the target terminal, for example, the first information does not include the area information, or a data field in the area information is empty, the tag management function network element determines an access network device corresponding to the target terminal and/or an access and mobility management function network element corresponding to the target terminal based on the capability information. In this case, the target terminal is all terminal devices in a network in which the tag management function network element is located, the access network device is an access network device that has a capability of performing the first operation in the network, and the access and mobility management function network element is an access and mobility management function network element that has a capability of performing the first operation in the network.

In a possible implementation, the access network device or the access and mobility management function network element or both serve the target terminal. It may also be referred to as that the access network device or the access and mobility management function network element or both correspond to the target terminal.

According to a sixth aspect, an embodiment of this application provides a communication apparatus, including a processor. The processor is configured to: read a program from a memory and run the program, to implement the method according to the first aspect and any possible implementation of the first aspect, or implement the method according to the second aspect and any possible implementation of the second aspect, or implement the method according to the third aspect and any possible implementation of the third aspect, or implement the method according to the fourth aspect and any possible implementation of the fourth aspect, or implement the method according to the fifth aspect and any possible implementation of the fifth aspect.

According to a seventh aspect, an embodiment of this application provides a communication system, including a tag management function network element and an access network device. The tag management function network element may perform the method according to the first aspect and any possible implementation of the first aspect, or the method according to the fifth aspect and any the possible implementation of the fifth aspect. The access network may perform the method according to the second aspect and any possible implementation of the second aspect.

In a possible implementation, the communication system further includes an access and mobility management function network element. The access and mobility management function network element may perform the method according to the third aspect and any possible implementation of the third aspect.

In a possible implementation, the communication system further includes a network exposure function network element. The network exposure function network element may perform the method according to the fourth aspect and any possible implementation of the fourth aspect.

According to an eighth aspect, an embodiment of this application provides a computer program product including instructions. When the computer program product is run on a computer, the computer is enabled to perform the method according to the first aspect and any possible implementation of the first aspect, or the method according to the second aspect and any possible implementation of the second aspect, or the method according to the third aspect and any possible implementation of the third aspect, or the method according to the fourth aspect and any possible implementation of the fourth aspect, or the method according to the fifth aspect and any possible implementation of the fifth aspect.

According to a ninth aspect, an embodiment of this application provides a computer-readable storage medium. The computer-readable storage medium stores instructions. When the instructions are run on a computer, a processor is enabled to perform the method according to the first aspect and any possible implementation of the first aspect, or the method according to the second aspect and any possible implementation of the second aspect, or the method according to the third aspect and any possible implementation of the third aspect, or the method according to the fourth aspect and any possible implementation of the fourth aspect, or the method according to the fifth aspect and any possible implementation of the fifth aspect.

### BRIEF DESCRIPTION OF DRAWINGS

FIG. 1 is a schematic diagram of a network architecture of a communication system to which this application is applicable;
FIG. 2 is a schematic diagram of an architecture in which a passive internet of things to which this application is applicable and a radio frequency identification technology are integrated;
FIG. 3A is a schematic diagram of a network architecture used for tag management to which this application is applicable;
FIG. 3B is a schematic diagram of another network architecture used for tag management to which this application is applicable;
FIG. 3C is a schematic diagram of still another network architecture used for tag management to which this application is applicable;
FIG. 3D is a schematic diagram of still another network architecture used for tag management to which this application is applicable;
FIG. 4 is a schematic diagram of a target terminal management method according to an embodiment of this application;
FIG. 5 is a schematic diagram of another target terminal management method according to an embodiment of this application;
FIG. 6 is a schematic diagram of still another target terminal management method according to an embodiment of this application;
FIG. 7 is a schematic diagram of still another target terminal management method according to an embodiment of this application;
FIG. 8A is a schematic diagram of still another target terminal management method according to an embodiment of this application;
FIG. 8B is a schematic diagram of still another target terminal management method according to an embodiment of this application;
FIG. 8C is a schematic diagram of still another target terminal management method according to an embodiment of this application;
FIG. 9 is a schematic diagram of still another target terminal management method according to an embodiment of this application;
FIG. 10 is a schematic diagram of still another target terminal management method according to an embodiment of this application;
FIG. 11 is a schematic diagram of still another target terminal management method according to an embodiment of this application;
FIG. 12 is a schematic diagram of a communication apparatus according to an embodiment of this application; and
FIG. 13 is a schematic diagram of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings. The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a future communication system, or another similar communication system. Network architectures and service scenarios described in this application are intended to describe the technical solutions in this application more clearly, and do not constitute any limitation on the technical solutions provided in this application. A person of ordinary skill in the art may know that, with evolution of the network architecture and emergence of a new service scenario, the technical solutions provided in this application are also applicable to similar technical problems.

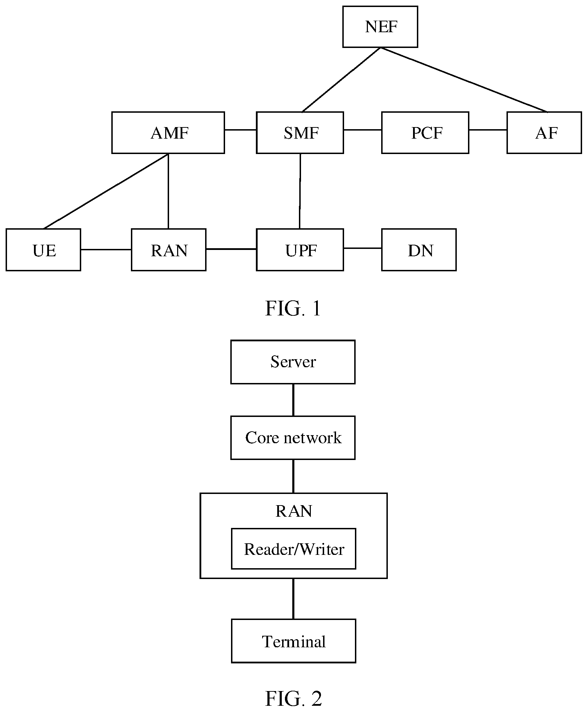

FIG. 1 is a schematic diagram of a network architecture according to an embodiment of this application. As shown in FIG. 1, the network architecture may include user equipment, a (radio) access network device, a user plane network element, a data network, a mobility management network element, a session management network element, an application network element, a policy control network element, a network exposure network element, and the like. The following separately describes the network elements in the network architecture.
1. User equipment (user equipment, UE): The user equipment may also be referred to as a terminal, an access terminal, a subscriber unit, a subscriber station, a mobile station, a mobile console, a remote station, a remote terminal, a mobile device, a user terminal, a wireless communication device, a user agent, a user apparatus, or a target terminal. The terminal may be a passive internet of things terminal, or may be a tag. The terminal may be a passive device. The passive device may be a passive tag. The passive tag may collect energy by using a backscattering technology to send or receive a packet. The passive tag includes but is not limited to radio frequency identification (radio frequency identification, RFID), Bluetooth, Zigbee, and other non-power terminal tags. The terminal may also be a semi-passive device or an active device. The active device may be a device with a wireless transceiver function, for example, a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medicine), a wireless terminal in a smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal in a 5G mobile communication system, a terminal in a future evolved network, or the like.

The wearable device may also be referred to as a wearable intelligent device, and is a general term of wearable devices, such as glasses, gloves, watches, clothes, and shoes, that are developed and intelligently designed for daily wear by using a wearable technology. The wearable device is a portable device that is worn on a body directly or integrated into clothes or an accessory of a user. The wearable device is not merely a hardware device, but further implements a powerful function through software support, data exchange, and cloud exchange. In a broad sense, wearable intelligent devices include full-featured and large-sized devices that can implement all or some of functions without relying on smartphones, for example, smart watches or smart glasses, and include devices that focus only on a specific type of application function and need to be used together with other devices such as smartphones, for example, various smart bands or smart jewelry for monitoring physical signs.

2. Radio access network (radio access network, RAN) device: The access network device may also be referred to as an access device. A RAN can manage a radio resource, provide an access service for user equipment, and complete forwarding of user equipment data between the user equipment and a core network. The RAN may also be understood as a base station in a network.

For example, the access network device in embodiments of this application may be any communication device that has a wireless transceiver function and that is configured to communicate with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G mobile communication system such as an NR system, may be one antenna panel or a group of antenna panels (including a plurality of antenna panels) of a base station in a 5G mobile communication system, or may be a network node that forms a gNB or a transmission point, such as a baseband unit (BBU) or a distributed unit (distributed unit, DU).

In some deployments, a gNB may include a central unit (central unit, CU) and a DU. The gNB may further include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, and functions related to radio frequency processing and an active antenna. Information at the RRC layer is generated by the CU, and is finally encapsulated into PHY layer information by using the PHY layer of the DU, or is converted from the PHY layer information. Therefore, in this architecture, higher layer signaling such as RRC layer signaling may also be considered as being sent by the DU, or sent by the DU and the AAU. It may be understood that the access network device may be a device including one or more of a CU node, a DU node, and an AAU node. In addition, the CU may be classified as an access network device in an access network, or the CU may be classified as an access network device in a core network (core network, CN). This is not limited in this application.

3. User plane network element: The user plane network element serves as an interface connecting to a data network, and implements user plane data forwarding, session/flow level-based charging statistics, bandwidth limiting, and the like, to be specific, packet routing and forwarding, quality of service (quality of service, QoS) handling for user plane data, and the like.

In the 5G communication system, the user plane network element may be a user plane function (user plane function, UPF) network element.

4. Data network: The data network provides, for example, operator services, internet access, or third-party services, and includes a server. The server implements video source encoding, rendering, and the like. In the 5G mobile communication system, the data network may be a data network (data network, DN).

5. Mobility management network element: The mobility management network element is mainly used for mobility management, access management, and the like. In the 5G mobile communication system, the access management network element may be an access and mobility management function (access and mobility management function, AMF), and mainly performs mobility management, access authentication/authorization, and the like. In addition, the access management network element is further responsible for transferring a user policy between a terminal and a policy control function (policy control function, PCF) network element.

6. Session management network element: The session management network element is mainly used for session management, user equipment internet protocol (internet protocol, IP) address allocation and management, selection and management of user plane functions, termination of interfaces towards policy control and charging functions, downlink data notification, and the like.

In the 5G mobile communication system, the session management network element may be a session management function (session management function, SMF) network element, and completes IP address allocation of a terminal, UPF selection, charging and QoS policy control, and the like.

7. Application network element: In the 5G mobile communication system, the application network element may be an application function (application function, AF) network element, and indicates an application function of a third party or an operator. The application network element is an interface for the 5G mobile communication system to obtain external application data, and is mainly used to transfer a requirement of an application side for a network side.

8. Policy control network element: The policy control network element includes a user subscription data management function, a policy control function, a charging policy control function, quality of service (quality of service, QoS) control, and the like, supports unified policy framework to govern network behavior, and provides policy rule information and the like to a control plane function network element (for example, an AMF network element or an SMF network element).

In the 5G communication system, the policy control network element may be a PCF.

9. Network exposure network element: In the 5G mobile communication system, the network exposure network element may be a network exposure function (network element function, NEF) network element, and is mainly used for exposure of services and capabilities of 3GPP network functions to an AF, and may also support provision of information from the AF to 3GPP network functions.

The foregoing function network elements may be network elements in a hardware device, or may be software functions running on dedicated hardware, or may be virtualization functions instantiated on a platform (for example, a cloud platform). One or more services may be obtained through division based on the foregoing function network elements. Further, a service independent of a network function may exist. In this application, instances of the function network elements, instances of services included in the function network elements, or instances of the service independent of the network function may be referred to as service instances.

A passive internet of things (Passive Internet of Thing, Passive IoT) technology is a representative technology of internet of things technologies. The passive internet of things technology may be used to implement, but is not limited to, a technology similar to a radio frequency identification (Radio Frequency Identification, RFID) technology, which is briefly referred to as an RFID-like technology below. The RFID technology may be referred to as a radio frequency identification technology, and is an automatic identification technology in wireless communication. Currently, the RFID may be integrated with the communication system in FIG. 1, to be a representative application of the passive internet of things. This application is described by using an example in which the passive internet of things technology implements a series of RFID-like operations on a terminal in a radio frequency manner. The RFID-like operations may include operations such as inventory, read, or write on the terminal. When the terminal is in readable coverage of a reader/writer, the reader/writer may read data information in the terminal, to achieve an objective of identifying the terminal and exchanging data. In a write operation scenario, the reader/writer may further have a write function. The passive internet of things technology has the advantages of easy operation, easy read, high flexibility, and a dynamic real-time property. The technology is widely used in various fields. The most common application scenarios are, for example, warehouse management, logistics transportation, or fixed asset management. Take logistics transportation as an example. The passive internet of things technology can help management personnel automatically collect goods information of a terminal. The management personnel can quickly query the goods information in a system, to improve goods handover speed and accuracy. If there is an exception such as loss of goods, the management personnel can also learn of and handle the exception in a timely manner. A business or service that uses the passive internet of things technology has characteristics of small transmission signaling traffic and noncontinuous service.

FIG. 2 is a schematic diagram of an architecture of a passive internet of things technology. A reader/writer of the passive internet of things technology is integrated into an access network device. A server delivers an instruction to the reader/writer of the access network device through a core network. For example, the instruction may include performing an operation such as read, write, or access on one or more specific terminals. The reader/writer executes the foregoing instruction on a tag in a specific coverage area of the access network device by using an air interface wireless technology of the access network device, and may finally implement management of a terminal. It is specially noted that, the terminal in this application may exist in an independent form, or may be integrated into a sensor, or the like. A form of the terminal is not limited in this application.

During actual application, different enterprises may deploy their own private reader/writer in the access network device. The enterprises may set up an application server based on their own requirements, and an instruction is delivered to a reader in a base station through the application server, to finally implement application of the passive internet of things technology. However, the current passive internet of things technology is only applicable to an enterprise-based application scenario, and an application scope and an application scale of the passive internet of things technology are limited due to personalized and private requirements of the enterprises.

This application provides a network architecture and method that are applicable to a passive internet of things technology, to resolve the foregoing problem.

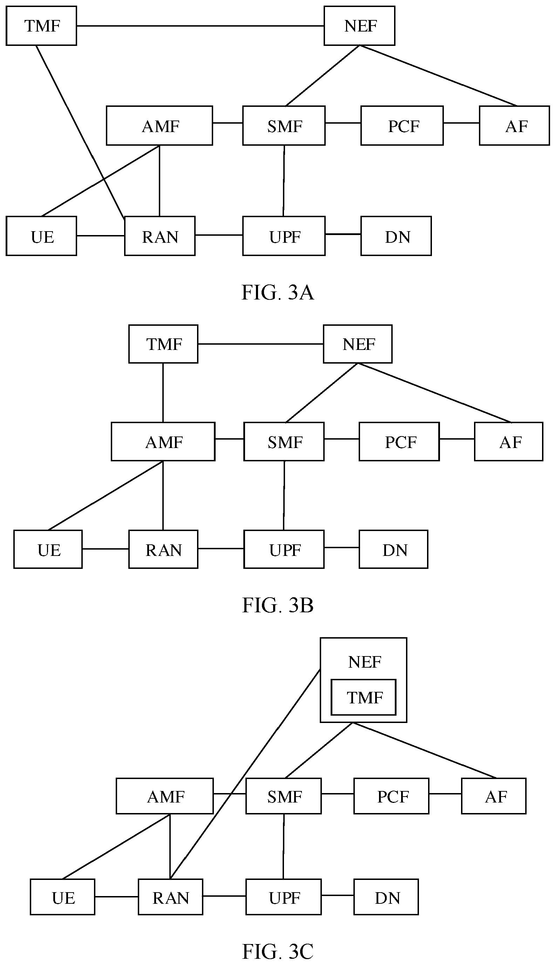

FIG. 3A to FIG. 3D show several network architectures applicable to the passive internet of things technology in this application. Compared with the architecture of the communication system shown in FIG. 1, this architecture adds a tag management function network element (Tag Management Function, TMF). The tag management function network element is referred to as TMF for short below. The TMF is used to manage a terminal of the passive internet of things. For example, the TMF may perform operations such as select, query, ACK, NAK, Req_RN, inventory, read, write, kill, lock, blockwrite, blockerase, access, encryption, decryption, timeout, invalid, and the like on the terminal. Inventory may also be referred to as stocktaking, which is not limited in this application. The following uses inventory for description.

In the network architecture shown in FIG. 3A, the TMF has an interface with a RAN, and has an interface with a NEF. The TMF may further communicate with an AF through the NEF. It may be understood that in this architecture, exchange may be performed between the NEF and the RAN through an N2 message. Specifically, the AF may send an instruction to the NEF. For example, the instruction is a read instruction. The NEF converts the instruction into a read instruction that can be identified by the TMF, and sends the converted read instruction to the TMF. The TMF may send the read instruction to the RAN over the interface between the TMF and the RAN, so that a reader/writer in the RAN executes the read instruction. In the network architecture, when the TMF sends an instruction to the RAN, the instruction needs to be forwarded by an AMF. It should be noted that the AMF does not need to sense content of the instruction, and only needs to identify a destination of the instruction, and forward the instruction to a RAN corresponding to the destination. During specific implementation, a message sent by the TMF to the RAN carries the content of the instruction, and a destination address of the message may be an address of the RAN, or may be an address of the AMF. The content of the instruction is included in a message container (message container) in the message. The AMF forwards content in the message container to the RAN. In a method applicable to the architecture shown in FIG. 3A, the AMF does not sense the content of the instruction.

FIG. 3B is another network architecture applicable to the passive internet of things technology in this application. Different from the network architecture shown in FIG. 3A, there is no interface between a TMF and a RAN. Therefore, exchange between the TMF and the RAN needs to depend on an AMF. Similarly, an example in which a message sent by the TMF to the RAN carries the instruction is used for description. The TMF sends a message to the AMF, and a destination address of the message is an address of the AMF. The AMF parses the content of the instruction in the message, determines a target RAN corresponding to the instruction, and subsequently sends the instruction to the target RAN. In a method applicable to the network architecture shown in FIG. 3B, the AMF senses the content of the instruction, and forwards the content to a destination apparatus or a destination network element corresponding to the instruction.

FIG. 3C is still another network architecture applicable to the passive internet of things technology in this application. Different from the foregoing two network architectures, the TMF is used as a part of a NEF. In other words, the TMF may be considered as a functional component of the NEF, or may be understood as that the NEF has functions of the TMF. In the network architecture shown in FIG. 3C, the NEF may have an interface with a RAN. This is similar to the network architecture shown in FIG. 3A, except that the NEF and the TMF in the network architecture shown in FIG. 3A are combined together. Details are not described again. Alternatively, the NEF may have an interface with an AMF. This is similar to the architecture shown in FIG. 3B, except that the NEF and the TMF in the network architecture shown in FIG. 3B are combined together. Details are not described again. It should be specially noted that, different from the network architecture shown in FIG. 3A, the NEF does not need to translate information received from an AF into information that can be understood by the TMF. In the network architecture shown in FIG. 3C, the TMF may directly parse the information received from the AF.

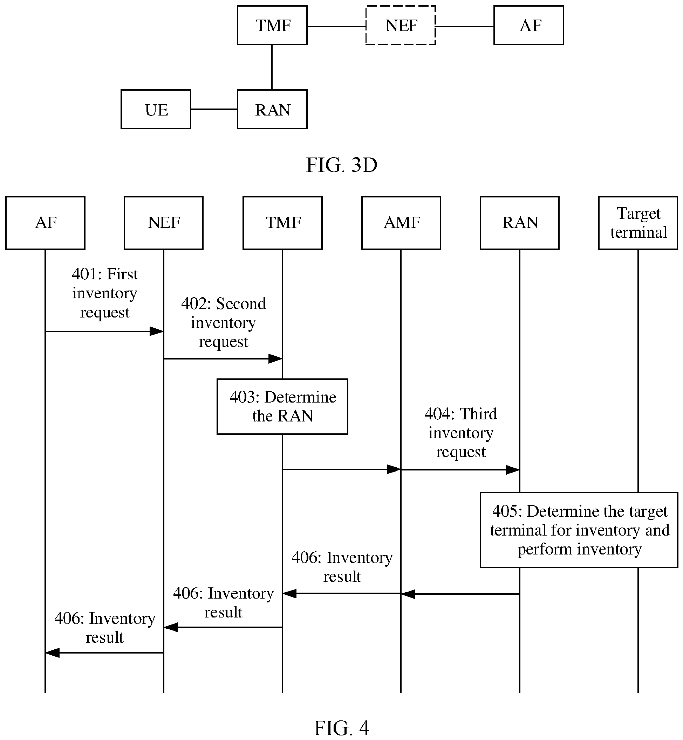

FIG. 3D is still another network architecture applicable to the passive internet of things technology in this application. A difference from the foregoing three network architectures lies in that in the network architecture shown in the figure, the TMF may exchange with an AF through a NEF, or may directly exchange with the AF. In addition, in the network architecture, an interface between the TMF and a RAN may be an interface different from an N2 interface. For example, the interface may be an enhanced N2 interface, or may be an N2-like interface, or may be an enhanced N2-like interface. This name is not limited in this application. The TMF may directly exchange with UE. An exchange message between the TMF and the UE may be a non-access stratum (non-access stratum, NAS) message. Specifically, the NAS message may be a simplified NAS message. For example, specifically, when the TMF exchanges with the UE by using the simplified NAS message, the TMF implements exchange between the TMF and the UE over the interface between the TMF and the RAN.

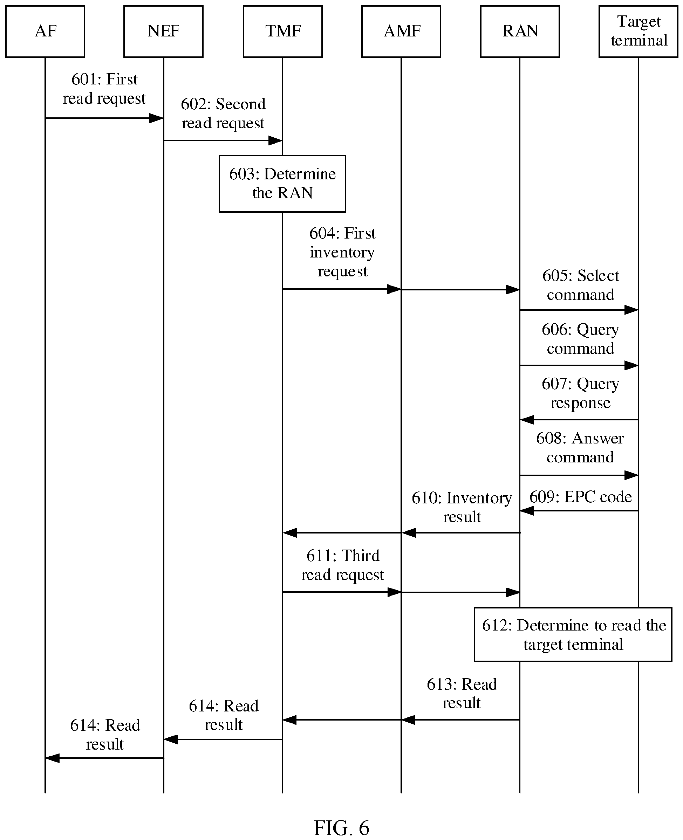

In addition, in the foregoing network architecture, the TMF may further have an interface with the UE, and exchange is performed by using an N1-like message. For a specific function of the interface, refer to subsequent descriptions in FIG. 6.

It should be understood that, in the foregoing several different network architectures, if the TMF creates a session, for example, a protocol data unit (Protocol Data Unit, PDU) session, the TMF may perform signaling exchange with an SMF, for example, directly perform signaling exchange over an interface between the TMF and the SMF, or may perform signaling exchange with the SMF through a NEF. This is not limited in this application. In addition, it should be further understood that the network elements in the foregoing different architectures may be deployed in different equipment rooms, and the TMF may alternatively be deployed together with different core network elements. A specific deployment form is not limited.

It should be understood that in the following embodiments, there may be one or more target terminals.

FIG. 4 is a schematic flowchart of a target terminal management method applicable to the architecture shown in FIG. 3A. The method may include the following steps.

Step 401: An AF sends a first inventory request to a NEF.

For example, the first inventory request may include an indication for inventory. The indication for inventory indicates to perform an inventory operation.

For example, an enterprise or a user may deliver an inventory command by using software on an interface of a client. In this case, the AF may obtain the inventory command, generate the first inventory request, and send the first inventory request to the NEF.

For example, the first inventory request includes first inventory area information. The first inventory area information indicates a range of a RAN that requests to execute the inventory instruction. Specifically, the first inventory area information may be an identifier of the RAN, or may be other area information used to determine the RAN. More specifically, a terminal may be selected and determined by using status information, for example, statuses in different scenarios such as S0 and S 1, of a target terminal. In addition, an identifier range of the target terminal may be selected and determined based on an identifier of the target terminal, a range of a group identifier-related value, or mask length information of the target terminal.

For example, the first inventory request includes an inventory object. The inventory object may be identifiers of one or more target terminals, or may be one or more group identifiers of target terminals in a unit of a group. In addition, the inventory object may alternatively be an application identifier. The application identifier may be used to identify one or more target terminals corresponding to an application. In other words, the inventory object is used to identify a target terminal on which the first inventory request requests to execute the inventory command. In addition, the first inventory request may further include information for determining a quantity of target terminals. Specifically, different mask lengths may indicate the quantity of target terminals.

For example, the first inventory request includes an association identifier (Identifier, ID). The association identifier may be used to associate the current first inventory request. If a plurality of instructions related to the passive internet of things technology exist in a current network, the association identifier helps distinguish a result corresponding to the instruction.

Step 402: The NEF sends a second inventory request to a TMF.

For example, the second inventory request may include second area information. The second area information is another expression form of the first area information in step 401. In other words, the NEF translates the first area information into area information that can be identified by the TMF, namely, the second area information.

For example, the second area information may include at least one of the following: a cell identity (Cell ID), a tracking area identifier (Tracking Area Identifier, TAI), or a tracking area list (Tracking Area List, TAL) identifier. The cell identity may be used to identify a specific cell in the RAN. The RAN corresponds to the TAI, and the TAL includes one or more tracking area identifiers. Therefore, both the TAI and the TAL may be used to determine a RAN for inventory.

It should be understood that, in addition to the second area information, the second inventory request further includes other information in the first inventory request, for example, the inventory object, and for another example, the association identifier.

Step 403: The TMF determines a RAN.

For example, the TMF determines, based on the second area information in step 402, information about the RAN that should execute the inventory instruction. In addition, the TMF may further determine an AMF corresponding to the RAN, to transfer the inventory instruction to the RAN through the AMF.

It should be understood that there may be one or more RANs.

Step 404: The TMF sends a third inventory request to the RAN through the AMF.

It should be understood that the RAN is the RAN determined in step 403.

For example, the third inventory request may include the second area information and/or the inventory object in the second inventory request. In addition, the third inventory request may further include the association identifier. In other words, content in the third inventory request may be consistent with content in the second inventory request. Alternatively, the third inventory request may include only the second area information, or may include only the inventory object, or may include the inventory object and the second area information. In addition, the third inventory request may further include the foregoing association identifier.

For example, when the third inventory request includes only the second area information, it means that the TMF sends the third inventory request to all RANs involved in the second area information. Similarly, if the third inventory request includes only the inventory object, it means that the TMF sends the third inventory request to all RANs corresponding to the inventory obj ect.

For example, the third inventory request may alternatively include only some information in the second area information. For example, the third inventory request may include only the cell identity in the second area information.

For this step, refer to the descriptions in the architecture shown in FIG. 3A, that is, the TMF transparently transmits the third inventory request to the RAN through the AMF.

Step 405: The RAN determines a target terminal and performs inventory.

For example, when the third inventory request received by the RAN includes an inventory object, the RAN determines the target terminal based on the inventory object, and performs inventory. When the third inventory request received by the RAN includes a cell identity, the RAN performs inventory on target terminals covered by a cell corresponding to the cell identity. Alternatively, when the third inventory request includes at least one of a TAI or a TAL, the RAN performs inventory on target terminals in coverage of the RAN. It should be understood that, for example, if the third inventory request includes an inventory object and a cell identity, the RAN performs inventory on one or more target terminals that meet a condition of the inventory object and that are in target terminals covered by a cell.

Step 406: The RAN sends an inventory result to the AF.

For example, the inventory result includes information about the target terminal. Specifically, the information about the target terminal may include a protocol control (Protocol Control, PC) code, an electronic product code (Electronic product code, EPC), and a cyclic redundancy check (Cyclic redundancy check, CRC) of the target terminal.

For example, the RAN sends the inventory result to the TMF through the AMF, then the TMF sends the inventory result to the NEF, and finally the NEF sends the inventory result to the AF.

It should be understood that, if the RAN receives an association identifier in the foregoing step, the RAN may further send the inventory result and the association identifier to the AF.

In addition, optionally, the TMF may store the inventory result and information about the RAN that performs the inventory. A purpose is as follows: If another instruction requests to feed back the same information to the AF in a subsequent specific time, the foregoing procedure does not need to be performed again, and the TMF may directly report the information to the AF. Alternatively, if the AF subsequently requests to obtain some information in the inventory result, the TMF may directly obtain the information from information stored by the TMF, and there is no need to perform the foregoing steps again and select the information. This improves efficiency. The specific time may be an inventory cycle, or may be a preset period of time. This is not limited in this application.

In addition, optionally, the TMF may alternatively store a capability of the RAN. The TMF may select, based on recorded capabilities of different RANs, a proper RAN to execute a corresponding command on a terminal in a specific area. For example, if the terminal may be in coverage of two different RANs (such as a RAN 1 and a RAN 2), the TMF determines that the RAN 1 can execute a read instruction and a write instruction, and the RAN 2 can only perform a read operation on the terminal, when the instruction is a write operation, the TMF may select the RAN 1 to execute the write command on the terminal.

It should be specially noted that, during specific implementation, only the following condition needs to be satisfied: Association identifiers in information between the AF and the NEF are the same, association identifiers in information between the NEF and the TMF are the same, and association identifiers in information between the TMF and the RAN are the same. Association identifiers between the AF, the NEF, the TMF, and the RAN may be the same or different. In other words, association identifiers in step 401, step 402, and step 404 may be different, it is only required that an association identifier carried when the NEF sends the inventory result to the AF is the same as the association identifier in step 401, an association identifier carried when the TMF sends the inventory result to the NEF is the same as the association identifier in step 402, and an association identifier carried when the RAN sends the inventory result to the TMF is the same as the association identifier in step 404. Alternatively, it is only required that an association identifier of a single request message between two network elements is consistent with an association identifier of a response message of the single request message. Embodiments shown in other methods in this application are also applicable. Details are not described again.

According to the foregoing method, the TMF may serve as an administrator in a core network, to implement an RFID-like function of a passive internet of things, and execute a series of instructions such as inventory of a terminal. The TMF may provide a plurality of different instructions in a network, or a plurality of repeated instructions from different clients. Alternatively, the TMF improves management efficiency of passive tags when a current network status is complex.

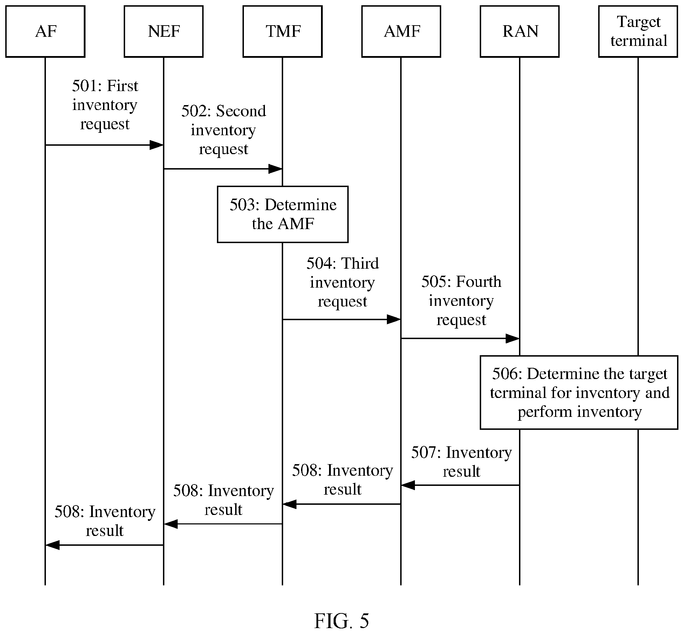

FIG. 5 is a schematic flowchart of another target terminal management method applicable to the architecture shown in FIG. 3B. With reference to the method shown in FIG. 4, the method may include the following steps.

Step 501: An AF sends a first inventory request to a NEF.

Step 502: The NEF sends a second inventory request to a TMF.

For step 501 and step 502, refer to descriptions of step 401 and step 402 in FIG. 4. Details are not described herein again.

Step 503: The TMF determines an AMF.

For example, the TMF determines, based on second area information in the second inventory request, information about the AMF that subsequently executes an inventory instruction. Specifically, the TMF may directly determine the AMF based on the second area information. Alternatively, refer to the descriptions in step 403 in FIG. 4, the TMF may directly determine information about a RAN, and determine the AMF corresponding to the RAN based on the information about the RAN.

It should be understood that there may be one or more RANs. If there are a plurality of RANs, there may be a plurality of AMFs.

Step 504: The TMF sends a third inventory request to the AMF.

For the third inventory request in this step, refer to the descriptions of the third inventory request in FIG. 4.

It should be understood that the AMF in this step is the AMF determined by the TMF in step 503. Similarly, there may be one or more AMFs.

Step 505: The AMF sends a fourth inventory request to the RAN.

For example, the AMF determines a RAN based on the second area information in the third inventory request, and sends the fourth inventory request to the RAN. Specifically, if the second area information includes a cell identity, the AMF determines, based on the cell identity, a RAN that provides the cell, and sends the fourth inventory request to the RAN. If the second area information includes a TAI, the AMF determines one or more RANs corresponding to the TAI based on the TAI, and sends the fourth inventory request to the one or more RANs.

For example, the fourth inventory request may be the same as or different from the third inventory request. Specifically, after determining the RAN based on the third inventory request, the AMF sends, to the RAN, the fourth inventory request corresponding to the RAN. In other words, if the AMF determines a plurality of RANs based on the third inventory request, such as a RAN 1 and a RAN 2, the AMF sends, to the RAN 1, information about an inventory object covered by the RAN 1, and sends, to the RAN 2, information about an inventory object covered by the RAN 2. In other words, information received by the plurality of RANs is information about inventory objects respectively related to the RANs. It should be understood that, in this case, because the AMF determines a plurality of RANs, there are also a plurality of fourth inventory requests. In this case, the fourth inventory request may be different from the third inventory request.

In addition, if the third inventory request includes an association identifier, the fourth inventory request may also include the association identifier. The second area information is similar to the inventory object.

Step 506: The RAN determines a target terminal for inventory and performs inventory.

For this step, refer to the descriptions of step 405 in FIG. 4.

Step 507: The RAN sends an inventory result to the AMF.

For the inventory result, refer to the descriptions in step 406 in FIG. 4.

Step 508: The AMF sends the inventory result to the AF.

For example, the AMF first sends the inventory result to the TMF, and the TMF sends the inventory result to the AF through the NEF.

Specifically, the AMF may summarize inventory results of different RANs, and send a summarized inventory result to the AF. Alternatively, the AMF may directly send the inventory result in step 507 to the AF.

Similar to the method shown in FIG. 4, the TMF may also store information such as the inventory result, information about a RAN that executes the inventory instruction, a capability of the RAN, and selection and management of a reporting path. Details are not described herein again.

Compared with the method shown in FIG. 4, in the method shown in FIG. 5, the AMF may sense the third inventory request, determine, based on the third inventory request, a RAN that performs inventory, and send the fourth inventory request to the RAN. The fourth inventory request is a request adjusted for the RAN. In the method, the AMF sends different fourth requests to different RANs, so that signaling exchange between the TMF and the AMF is reduced. In addition, when the RAN completes inventory and reports an inventory result, the AMF may parse and integrate the inventory result, so that signaling exchange between the TMF and the AMF is reduced.

The foregoing method is also applicable to the network architecture shown in FIG. 3C. Specifically, because the TMF becomes a functional module in the NEF, information exchange between the TMF and the NEF may be considered as an internal action, and a detailed procedure is not described again.

In an existing application scenario of the passive internet of things, in addition to inventory of the target terminal, common functions further include read and write. Different from inventory, the read or write needs to depend on inventory information of the target terminal during specific implementation. Therefore, in this embodiment of this application, for a procedure that is applicable to the architectures shown in FIG. 3A to FIG. 3C and that is used to implement an operation that depends on the inventory information of the target terminal, refer to FIG. 6. According to the methods shown in FIG. 4 and FIG. 5, FIG. 6 is a schematic flowchart of still another target terminal management method applicable to the architectures shown in FIG. 3A to FIG. 3C. The method may include the following steps.

Step 601: An AF sends a first read request to a NEF.

For a parameter included in the first read request, refer to the descriptions of the first inventory request in FIG. 4. A difference between the first read request and the first inventory request is only that functions are different. The first read request is a request that is delivered by the AF and that has a read instruction, and the first inventory request is a request that is delivered by the AF and that has an inventory instruction.

Step 602: The NEF sends a second read request to a TMF.

Similar to step 601, for the second read request, refer to the descriptions of the second inventory request in FIG. 4.

Step 603: The TMF determines a RAN.

For step 601 to step 603, refer to descriptions of step 401 to step 403 in FIG. 4. Details are not described herein again.

The TMF determines whether information about an inventory object in the first read request can be obtained. If the information about the inventory object in the first read request can be obtained, step 611 is performed. If the information about the inventory object in the first read request cannot be obtained, step 604 is performed.

Step 604: The TMF sends a first inventory request to the RAN.

For the first inventory request, refer to the descriptions of the third inventory request in FIG. 4. For this step, refer to the descriptions of step 404 in FIG. 4. Details are not described again.

Step 605: The RAN sends a select command to a target terminal.

For example, when receiving an inventory command sent by a server, the RAN generates a select command. The select command carries the information about the inventory object. After receiving the select command, a terminal determines whether the terminal belongs to a terminal range indicated by the select command. If the terminal belongs to the indicated terminal range, information is fed back after a query command is subsequently received. If the terminal does not belong to the terminal range that should be determined, information does not need to be fed back after a query command is received. The command in this step may be understood as being used to excite the target terminal.

Step 606: The RAN sends a query command to the target terminal.

The query command may be represented by a Query command.

For example, the Query command includes a Q value.

Step 607: The target terminal sends a query response to a reader.

When finding that the target terminal belongs to an inventory object range in the select command, the target terminal sends a query response to the RAN. The query response includes a random number.

For example, the target terminal may feed back the random number to the RAN in a contention manner. For example, the random number may be a 16-bit random number (16-bit random number, RN16).

Step 608: The RAN sends an answer command to the target terminal.

After receiving the random number from the target terminal, the RAN sends the answer command to the target terminal. The command includes the random number in the query response.

Step 609: The target terminal sends an EPC code to the RAN.

After receiving the answer command from the RAN and verifying that the random number matches the random number in the query response in step 607, the terminal feeds back the EPC code of the terminal to the RAN. In addition, the target terminal may further send a protocol control code and a cyclic redundancy check to the RAN.

Step 610: The RAN sends an inventory result to the TMF.

For the inventory result, refer to the descriptions of the inventory result in step 406 in FIG. 4. In addition, the inventory result in this step may alternatively include the random number in step 607.

It should be understood that, if the RAN receives an association identifier in the foregoing step, the RAN may further send the inventory result and the association identifier to the TMF.

In step 609 and step 610, the target terminal may send the inventory result to the TMF sequentially through the RAN and an AMF. The inventory result includes the EPC code.

Step 611: The TMF sends a third read request to the RAN.

Specifically, the TMF compares the inventory result in step 610 with the information about the inventory object in the second read request, selects a target terminal that is consistent with the inventory object in the second read request, and sends the third read request to the RAN.

The third read request includes the random number of the target terminal, and may further include EPC information of the target terminal.

In addition, the third read request may include first indication information. The first indication information indicates information that is in a specified area of the target terminal and that the read request requests to read, for example, to read data in a specific range of the target terminal, but not to read all data of the target terminal. For example, read of a field 1 area of a storage area, such as temperature data, or read of a field 2 area of the storage area, such as humidity data, indicates to read data in a corresponding data area.

In addition, if the TMF receives an association identifier in the foregoing step, the third read request may include the association identifier.

Step 612: The RAN determines to read the target terminal.

For example, the RAN determines the target terminal based on the EPC information of the target terminal in the third read request, and sends a read command to the target terminal. The read command may include the first indication information in the third read request, to indicate area information of data to be read. For example, the read of the field 1 area of the storage area, such as the temperature data, or the read of the field 2 area of the storage area, such as the humidity data, indicates to read data in a corresponding data area. In addition, the read command may further include the random number and/or the cyclic redundancy check of the target terminal. Specifically, the target terminal checks the random number and/or the cyclic redundancy check. If the check succeeds, the target terminal sends information in a specified area of the target terminal to the RAN.

Optionally, step 611 and step 612 may be combined. To be specific, the TMF may directly send the third read request to the target terminal in a manner of transparent transmission through the RAN. After sending an EPC result to the TMF, the target terminal may be uniquely identified. The TMF may directly send read or write instruction information to the target terminal, to perform operations such as read and write information of a corresponding data area on the target terminal.

For example, the RAN finally receives information in a specified area of the target terminal from the target terminal. In addition, the RAN further receives the random number and/or the cyclic redundancy check of the target terminal. It should be understood that the RAN receives one or more messages from the target terminal. The one or more messages include the information in the specified area of the target terminal and the random number and/or the cyclic redundancy check of the target terminal. If the RAN receives a plurality of messages from the target terminal, each message may carry the random number and/or the cyclic redundancy check of the target terminal, to distinguish between terminals from which the plurality of messages come.

Step 613: The RAN sends a read result to the TMF.

The read result includes the information in the specified area of the target terminal. In addition, the read result may further include the random number and/or the cyclic redundancy check of the target terminal.

Specifically, the RAN may send the read result to the TMF through the AMF.

In step 611 to step 613, the TMF may perform a read operation on the target terminal over an interface between the TMF and the target terminal. Specifically, the TMF may directly send a read request to the target terminal over the interface between the TMF and the target terminal. During actual implementation, based on the network architecture shown in FIG. 3A, the TMF sends the read request through the RAN, and receives the read result through the RAN. In this manner, the RAN has a transparent transmission function. Based on the network architecture shown in FIG. 3A, the TMF delivers a read request through the AMF and the RAN, and receives a result of a read operation instruction through the AMF and the RAN. In this manner, the AMF and the RAN have a transparent transmission function.

Step 614: The TMF sends the read result to the AF.

For step 613 and step 614, refer to the descriptions of step 406 in FIG. 4.

A procedure of reading the target terminal depends on an inventory procedure. In other words, before reading information about the target terminal, the RAN needs to first obtain check information of the target terminal, an identifier of target terminal, or the like by using the inventory procedure. According to the method shown in FIG. 6, when the AF delivers a read request or command to the RAN, the TMF may determine, based on locally stored information about the target terminal, whether an inventory procedure needs to be re-initiated. If the information about the target terminal is locally stored, the TMF may directly deliver the read request to the RAN. This reduces a procedure of re-executing inventory. In addition, according to the method, an action of performing inventory by the AF before an objective of reading the target terminal is achieved may be further reduced. This reduces a load of the AF. In conclusion, the TMF simplifies operation signaling exchange between the AF and the access network device, and simplifies complexity of the AF.

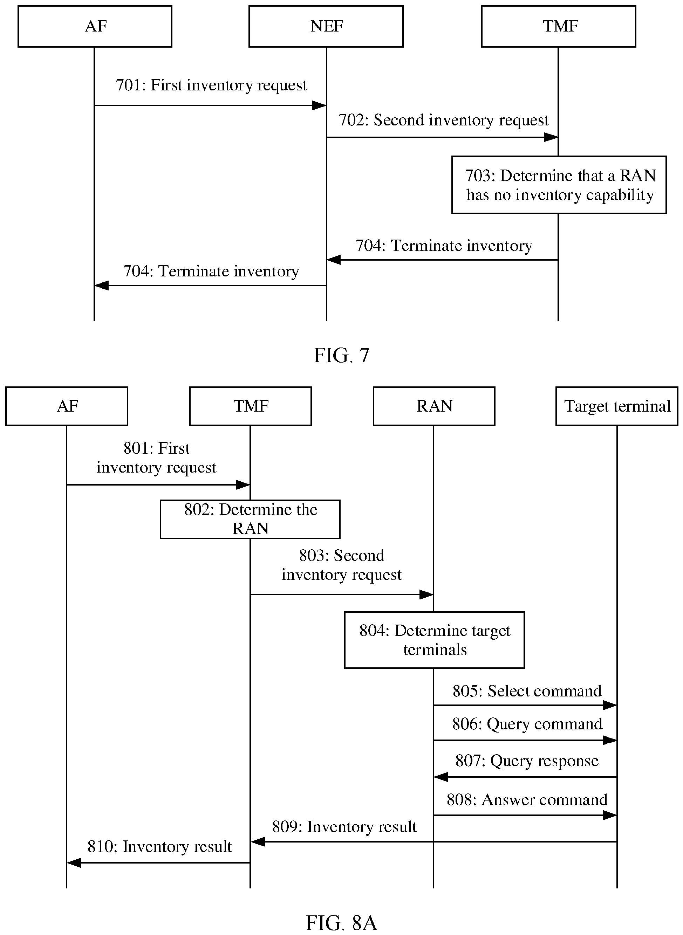

FIG. 7 is a schematic flowchart of still another target terminal management method applicable to the architectures shown in FIG. 3A to FIG. 3C. Different from the methods shown in FIG. 4 to FIG. 6, in the method shown in the figure, when there is no RAN that can perform an operation related to a request, the TMF may report that the operation fails to be performed. Specifically, the method may include the following steps.

Step 701: An AF sends a first inventory request to a NEF.

Step 702: The NEF sends a second inventory request to a TMF.

For step 701 and step 702, refer to the descriptions of step 401 and step 402 in FIG. 4. Details are not described herein again.

Step 703: The TMF determines that a RAN has no inventory capability.

For example, before step 703, the RAN sends capability information of one or more RANs to the TMF. The capability information may indicate whether the one or more RANs are capable of performing a specific operation. The operation may be inventory, read, write, or the like. Specifically, the RAN may send a registration request message to the TMF. The registration request message includes the capability information. Therefore, the TMF may obtain the capability information of the RAN, to determine whether there is a RAN that can perform a specific operation. In this step, the TMF may determine, based on the obtained capability information, whether there is a RAN that can perform the inventory operation.

In a possible case, the capability information may be locally stored in the TMF. In this case, the TMF finds, based on the locally stored information, that a RAN corresponding to a target terminal has no inventory capability. In a possible case, the capability information may be stored in an AMF. The TMF determines, based on information provided by the AMF, that the RAN is currently faulty and cannot perform inventory.

In a possible case, the TMF determines, based on the information provided by the AMF or the locally stored information, that there is no RAN that can perform inventory on the target terminal in step 701 in a current network. It should be understood that the locally stored information may be information obtained at any time before this step. For example, the information may be identification information, obtained by performing the method shown in FIG. 4, of terminals on which inventory can be performed by different RANs in the network.

Step 704: The TMF sends an inventory termination message to the AF.

For example, the TMF determines, by using step 703, that the RAN has no inventory capability, and then initiates an inventory termination procedure. Specifically, the TMF may send the inventory termination message to the AF through the NEF. The message is used to notify the AF that the current network cannot perform inventory on a terminal performed by the AF. It should be understood that a type of the message is not limited in this application.

According to the method shown in FIG. 7, the TMF may determine, based on known information, whether there is a RAN that can perform inventory on a target terminal specified by the AF in the current network, to prevent the AF from still sending an inventory instruction to a RAN when there is no RAN that can perform inventory. This can reduce signaling exchange in the network, and reduce a probability of an inventory failure.

FIG. 8A is a schematic flowchart of a target terminal management method applicable to the architecture shown in FIG. 3D. The method may include the following steps.

Step 801: An AF sends a first inventory request to a TMF.

For the first inventory request, refer to the descriptions of the first inventory request in FIG. 4.

For example, the AF may send the first inventory request to the TMF through a NEF, or directly send the first inventory request to the TMF, or send the first inventory request to the TMF through another network element. This is not limited in this application.

Step 802: The TMF determines a RAN.

For example, the TMF may determine the RAN based on the first inventory request. In a possible implementation, if the first inventory request includes first area information, the TMF may translate the first area information in the first inventory request into area information that can be identified by the RAN, namely, second area information. For the second area information, refer to the descriptions of the second area information in FIG. 4. The TMF may determine the RAN based on the second area information. In one case, if the TMF is deployed locally, and a corresponding RAN is the only local deployment, when information exchange between all terminals and the TMF needs to be performed through the RAN, the TMF does not need to determine the RAN, and only a default deployment or a uniquely specified path is used to forward a message.

For this step, refer to the descriptions of step 403 in FIG. 4.

Step 803: The TMF sends a second inventory request to the RAN.

The second inventory request may include indication information for the RAN, to indicate the RAN to perform different processing when performing inventory on a terminal. For example, in a case, after receiving information about an EPC identifier of a target tag 1, the RAN automatically obtains EPC information of a next target tag. In this case, the information is second indication information that indicates the RAN to perform continuous inventory. In another possible case, after receiving information that is of a target tag 1 and that includes an EPC identifier of the target tag 1, the RAN triggers obtaining of EPC information of a next target tag only after waiting for a new instruction delivered by the TMF. In this case, the information is first indication information that indicates the RAN to wait for the new instruction of the TMF to trigger inventory of the next tag. Optionally, the corresponding indication information may be different instruction messages that cover semantics. For example, different instructions are respectively included based on two request messages: an inventory request type 1 and an inventory request type 2 or two request messages: a tag selection request 1 and a tag selection request 2 to instruct the RAN to select corresponding tags for inventory.

More specifically, the indication information or the instruction message in this step may be processed, based on the indication information in the first inventory request in step 801, to perform an operation that the TMF delivers different indication information to the RAN.

For example, the second inventory request may include the second area information. It should be understood that the second inventory request may further include other information in the first inventory request, for example, an inventory object, and for another example, an association identifier.

For example, the TMF may send the second inventory request to the RAN over an enhanced N2 interface.

Step 804: The RAN determines target terminals and performs inventory.

For this step, refer to the descriptions of step 405 in FIG. 4.

Step 805: The RAN sends a select command to the target terminals.

Step 806: The RAN sends a query command to the target terminals.

Step 807: A target terminal 1 sends a query response to a reader. Specifically, the target terminal 1 is one of the target terminals.

Step 808: The RAN sends an answer command to the target terminal 1.

For step 805 to step 808, refer to the descriptions of step 605 to step 608 in FIG. 6.

Step 809: The target terminal 1 sends an inventory result to the TMF.

When there are a plurality of inventory objects in the second inventory request, and the instruction delivered by the TMF to the RAN indicates the first indication information, after obtaining the inventory result of the target terminal 1, the TMF sends instruction information for performing inventory on a next terminal to the RAN, so that the RAN continues to perform steps 805 to 809, and the TMF obtains an inventory result of a next target terminal 2. When the instruction delivered by the TMF to the RAN indicates the second indication information, after receiving information about an EPC identifier of the target terminal 1, the RAN automatically obtains EPC information of a next target terminal 2. Optionally, the RAN may send EPC information of a single terminal by using a single message, or may perform message combination processing on EPC information, and combine terminal information of a plurality of EPCs into a same message and send the message to the TMF. The target terminal 2 is one of the target terminals.

Optionally, after inventory of all terminals ends, the TMF may send an end instruction to the RAN, to indicate that a current round of inventory ends.

For the inventory result, refer to the descriptions in step 406.

For example, the target terminal sends a NAS message to the TMF. The NAS message includes the inventory result. For the NAS message, refer to the descriptions in FIG. 3D. Further, the target terminal may directly communicate with the TMF over an interface between the target terminal and the TMF, so that operations of the RAN and the AMF are further simplified.

Step 810: The TMF sends the inventory result to the AF.

For this step, refer to the descriptions of 406 in FIG. 4.

For beneficial effects of the method shown in this embodiment, refer to the descriptions in the foregoing embodiments. Details are not described again.

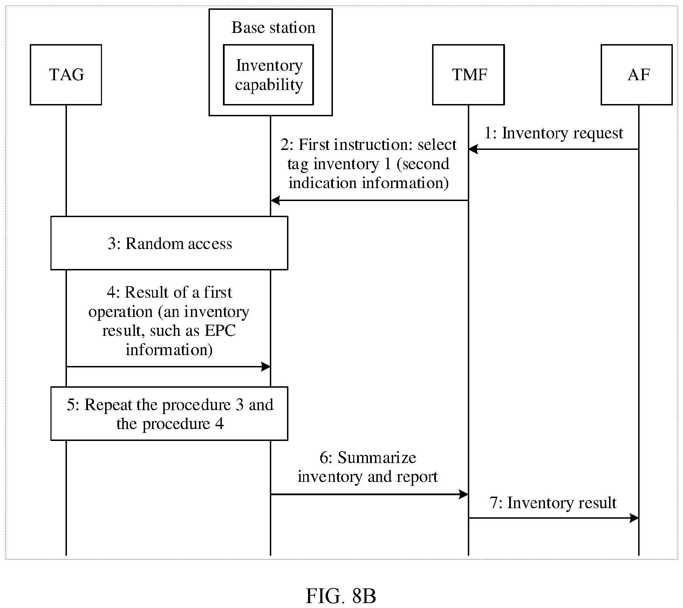

With reference to FIG. 8A, FIG. 8B is a schematic flowchart of a target terminal management method applicable to the architecture shown in FIG. 3D. For a TAG in this embodiment, refer to the foregoing descriptions of the target terminal, and for a base station, refer to the foregoing descriptions of the RAN. The method may include the following steps.

Step 1: An AF sends an inventory request to a TMF. For this step, refer to the descriptions of step 801 in FIG. 8A.

Step 2: The TMF sends a first instruction to the base station.

The first instruction instructs to select tag inventory 1 (second indication information). For this step, refer to the descriptions of step 802 and step 803 in FIG. 8A.

Step 3: Random access. For this step, refer to the descriptions of step 805 to step 808 in FIG. 8A.

Step 4: The TAG sends a result of a first operation to the base station. For this step, refer to the descriptions of step 809.

The result of the first operation includes an inventory result (EPC information and the like).

Step 5: Repeatedly perform step 3 and step 4.

Step 6: The base station reports a summarized result of inventory to the TMF.

Step 7: The TMF sends the inventory result to the AF.

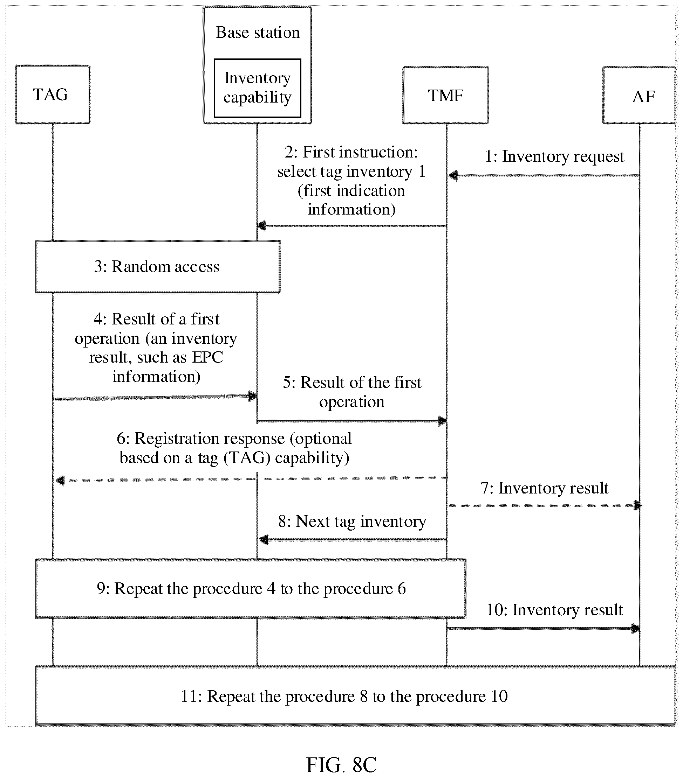

For step 4 to step 7, refer to the descriptions of step 809 in FIG. 8.

FIG. 8C is a schematic flowchart of a target terminal management method applicable to the architecture shown in FIG. 3D. For a TAG in this embodiment, refer to the foregoing descriptions of the target terminal, and for a base station, refer to the foregoing descriptions of the RAN. The method may include the following steps.

Step 1: An AF sends an inventory request to a TMF. For this step, refer to the descriptions of step 801 in FIG. 8A.

Step 2: The TMF sends a first instruction to the base station. For this step, refer to the descriptions of step 802 and step 803 in FIG. 8A.

The first instruction instructs to select tag inventory (first indication information).

Step 3: Random access. For this step, refer to the descriptions of step 805 to step 808 in FIG. 8A.

Step 4: The TAG sends a result of a first operation to the base station.

The result of the first operation includes an inventory result (EPC information and the like).

Step 5: The base station sends the result of the first operation to the TMG.

Step 6: The TMF sends a registration response to the TAG.

This step is optional. The registration response may be optionally executed based on a tag (TAG) capability.

Step 7: The TMF sends an inventory result to the AF.

Step 8: The TMF sends next tag (TAG) inventory to the base station.

Step 9: Repeatedly perform step 4 to step 6.

Step 10: The TMF sends an inventory result to the AF.

Step 11: Repeatedly perform step 8 to step 10.

For step 4 to step 11, refer to the descriptions of step 809 in FIG. 8.

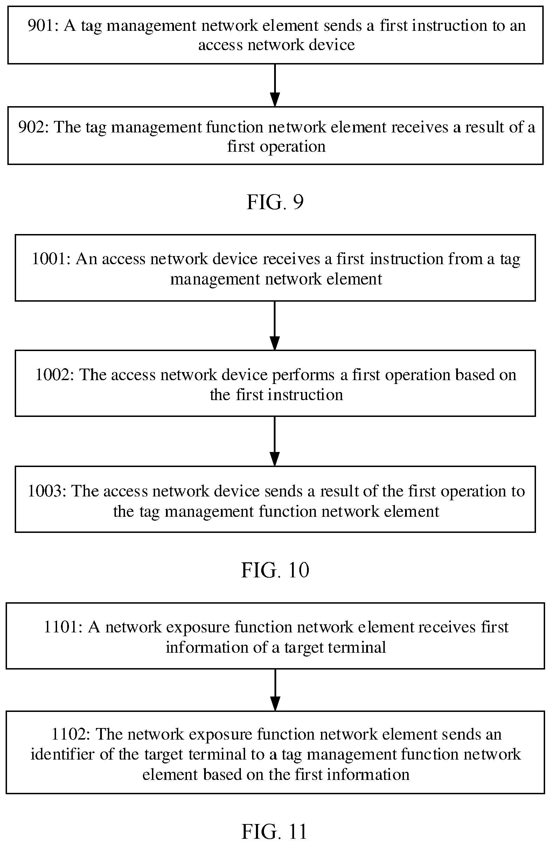

FIG. 9 is a schematic flowchart of a target terminal management method applicable to the architectures shown in FIG. 3Ato FIG. 3D. For the method, refer to the foregoing descriptions of FIG. 4 to FIG. 8C. Specifically, the method is performed by a tag management function network element. For the tag management function network element, refer to the foregoing descriptions of the TMF in FIG. 4 to FIG. 8C. For an access network device, refer to the foregoing descriptions of the RAN in FIG. 4 to FIG. 7. The method may include the following steps.

Step 901: The tag management network element sends a first instruction to the access network device.

For this step, refer to the descriptions of step 404 in FIG. 4, step 504 and step 505 in FIG. 5, step 604 in FIG. 6, and step 803 in FIG. 8A.

For example, the first instruction includes information about a target terminal. The target terminal includes a first terminal. The first instruction instructs the access network device to perform a first operation on the target terminal. For the information about the target terminal, refer to the descriptions of the inventory object. For example, the target terminal may be a terminal of a passive internet of things. The terminal may be a tag, for example, a passive tag. Alternatively, the target terminal may be a terminal device applicable to a passive internet of things technology.

For the first instruction, refer to the descriptions of the one or more inventory requests in the foregoing embodiments. For example, for the first instruction, refer to the descriptions of the third inventory request in FIG. 4. The first operation includes at least one of the following: inventory, read, write, kill, lock, blockwrite, blockerase, access, encryption, and decryption.

It should be understood that the first instruction instructs the access network device to perform the first operation on the target terminal corresponding to the information about the target terminal. Specifically, the first operation triggers the first terminal in the target terminal to send an identifier of the first terminal. When the access network device performs the first operation on the target terminal, it may be specifically understood that inventory is performed on the target terminal first, so that at least one terminal in the target terminal feeds back an identifier of the terminal. The foregoing procedure may also be understood as a random access process of the target terminal.

In a possible implementation, before that a tag management network element sends a first instruction to an access network device, the method further includes: The tag management function network element receives a first request, where the first request includes first information; the tag management function network element determines the first operation based on the first request; and the tag management function network element determines the access network device based on the first information.

In a possible implementation, the first information includes the information about the target terminal and/or first area information.

In a possible implementation, the first area information includes at least one of the following: an area identifier, a tracking area identifier, a tracking area list, an identifier of an access and mobility management function network element, an identifier of the access network device, and a cell identity. The tracking area identifier is used to identify a tracking area in which the access network device is located. The tracking area list includes the tracking area identifier. The cell identity is used to identify a cell that is in the access network device and that corresponds to the target terminal. The area identifier is used to identify an area in which the access network device is located. There is a correspondence between the area identifier and the tracking area identifier. There is a correspondence between the area identifier and the tracking area list. There is a correspondence between the area identifier and the cell identity. In addition, the first area information may further include information indicating a geographical location. For the first area information, refer to the descriptions of the first area information and the second area information in FIG. 4. It should be understood that a correspondence between the information indicating the geographical location and an access network device corresponding to the information or an access and mobility management function network element corresponding to the information is obtained in the tag management function network element.

In a possible implementation, the method further includes: The tag management function network element determines an access and mobility management function network element corresponding to the access network device; and that the tag management function network element sends a first instruction to an access network device includes: The tag management function network element sends the first instruction to the access network device through the access and mobility management function network element corresponding to the access network device.

In a possible implementation, the first request further includes an association identifier. The method further includes: The tag management function network element sends the association identifier to the access network device. A result of the first operation further includes the association identifier.

In a possible implementation, the information about the target terminal includes at least one of the following: an identifier of the target terminal, a group identifier of a target terminal group, status information of the target terminal, an identifier range of the target terminal, mask information of the target terminal, identification information of a user of the target terminal, or identification information of an application to which the target terminal belongs.

In a possible implementation, the first instruction further includes first indication information. The first indication information indicates the access network device to wait for a second instruction of the tag management network element after completing the first operation on the first terminal. It may be understood that the second instruction may be to perform the first operation on a second terminal of the target terminal, or may be to end execution of the first instruction.

In a possible implementation, the method further includes: The tag management network element sends the second instruction to the access network device, so that the access network device performs the first operation on the second terminal.

In a possible implementation, the target terminal further includes a second terminal. The method further includes: The first instruction further includes second indication information, and the second indication information indicates the access device to perform the first operation on the second terminal after completing the first operation on the first terminal.

Step 902: The tag management function network element receives the result of the first operation.

For this step, refer to the descriptions of step 406 in FIG. 4, step 507 and step 508 in FIG. 5, step 613 in FIG. 6, and step 809 in FIG. 8A.

For example, for the result of the first operation, refer to the foregoing descriptions of the inventory result.

For example, the result of the first operation includes the identifier of the first terminal.

In a possible implementation, the method further includes: The tag management function network element receives a second request, where the second request is used to request the first operation; and the tag management function network element sends the received result of the first operation.

In a possible implementation, the method further includes: The tag management function network element receives a third request, where the third request includes a second operation; the tag management function network element determines that there is no access network device configured to perform the second operation; and the tag management function network element sends a failure response, where the failure response indicates that the second operation fails to be performed.

In a possible implementation, the method further includes: The tag management function network element obtains capability information of one or more access network devices, where the capability information indicates whether the one or more access network devices are capable of performing the second operation; and that the tag management function network element determines that there is no access network device configured to perform the second operation includes: The tag management function network element determines, based on the first information and the capability information, that there is no access network device configured to perform the second operation.

In a possible implementation, the method further includes: The tag management function network element determines a third operation based on the first request; after receiving the result of the first operation performed on a first tag, the tag management function network element sends the third operation to the first terminal through the access network device; and the tag management function network element receives a result of the third operation. It should be understood that the third operation may be performed based on a first parameter. Specifically, the first parameter situation-dependent. For example, when the first instruction is read, the first parameter may include specific to-be-read location information; or when the first instruction is write, the first parameter may include information that should be written and specific to-be-written location information. The location information is information about an area in which data is stored in the target terminal. It should be further understood that, the time at which the tag management function network element determines, based on the first request, to perform the third operation may be the same as or different from the time at which the result of the first operation performed on the first tag is received. A sequence is not limited. It may be further understood that the third operation may include a plurality of operations. The tag management function network element may send a plurality of instructions to the first terminal through the access network device. This is not limited in this application. The result of the third operation includes at least one of the following: an electronic product code, a cyclic redundancy check, a protocol control code, data field information of the target terminal, and acknowledgment information of the first operation.

In a possible implementation, the method further includes: The tag management function network element receives third indication information from the access network device; and the tag management function network element learns, based on the third indication information, that the first operation performed by the access network device on the target terminal is completed.

In a possible implementation, the method further includes: The tag management function network element sends the result of the first operation to a network exposure function network element or an application function network element. The result of the first operation includes at least one of the following: the electronic product code, the cyclic redundancy check, and the protocol control code.

In a possible implementation, the access network device or the access and mobility management function network element or both serve the target terminal.

For beneficial effects of the method in this embodiment, refer to the foregoing descriptions. Details are not described again.

FIG. 10 is a schematic flowchart of still another target terminal management method applicable to the architectures shown in FIG. 3Ato FIG. 3C. For the method, refer to the foregoing descriptions of FIG. 4 to FIG. 8C. Specifically, the method is performed by an access network device. For a tag management function network element, refer to the descriptions of the TMF in FIG. 4 to FIG. 8C. For the access network device, refer to the descriptions of the RAN in FIG. 4 to FIG. 8C. The method may include the following steps.

Step 1001: The access network device receives a first instruction from the tag management network element.

For this step, refer to the descriptions of step 404 in FIG. 4, step 504 and step 505 in FIG. 5, and step 604 in FIG. 6.

For example, the first instruction includes information about a target terminal. The target terminal includes a first terminal.

Step 1002: The access network device performs a first operation based on the first instruction.

For this step, refer to the descriptions of step 405 in FIG. 4, step 506 in FIG. 5, and step 605 to step 609 in FIG. 6.

Step 1003: The access network device sends a result of the first operation to the tag management function network element.

For this step, refer to the descriptions of step 406 in FIG. 4, step 507 in FIG. 5, and step 610 in FIG. 6.

The result of the first operation includes an identifier of the first terminal.

In a possible implementation, the first instruction further includes first indication information. After that the access network device performs a first operation on the first terminal, the method further includes: The access network device waits for a second instruction of the tag management network element based on the first indication information.

In a possible case, the target terminal includes a second terminal. The method further includes: The access network device receives the second instruction from the tag management network element; and the access network device performs the first operation on the second terminal based on the second instruction. For the second instruction, refer to the descriptions of the second instruction in the first aspect. Details are not described again.

In a possible implementation, the first instruction further includes second indication information. After that the access network device performs a first operation on the first terminal, the method further includes: The target terminal further includes a second terminal, and the access device performs the first operation on the second terminal based on the second indication information.

In a possible implementation, the result of the first operation includes an identifier of the second terminal. It should be understood that there may be one or more second terminals. In other words, that the access network device sends a result of the first operation to the tag management function network element is to send the result of the first operation to the tag management function network element after results corresponding to a plurality of terminals (for example, the first terminal and at least one second terminal) of the target terminal are collected. For beneficial effects of the method in this embodiment, refer to the foregoing descriptions. Details are not described again.

FIG. 11 is a schematic flowchart of still another target terminal management method applicable to the architectures shown in FIG. 3Ato FIG. 3C. For the method, refer to the foregoing descriptions of FIG. 4 to FIG. 7. Specifically, the method is performed by a network exposure function network element. For the network exposure function network element, refer to the foregoing descriptions of the NEF, and for a tag management function network element, refer to the foregoing descriptions of the TMF.

The method may include the following steps.

Step 1101: The network exposure function network element receives first information of a target terminal.

For the first information, refer to the descriptions of the information about the target terminal in the first inventory request in step 401 in FIG. 4, the information about the target terminal in the first inventory request in step 501 in FIG. 5, the information about the target terminal in the first read request in step 601 in FIG. 6, and the information about the target terminal in the first inventory request in step 701 in FIG. 7.

In a possible implementation, the network exposure function network element receives a request used to perform a first operation. The request includes the first information of the target terminal, and the request is used to perform the first operation on the target terminal corresponding to the first information.

In a possible implementation, the information about the target terminal of the first operation includes at least one of the following: a group identifier of a target terminal group, identification information of a user of the target terminal, or identification information of an application to which the target terminal belongs.

Step 1102: The network exposure function network element sends an identifier of the target terminal to the tag management function network element based on the first information.

In a possible implementation, the network exposure function network element sends a first request to the tag management function network element based on the information about the target terminal. For the first request, refer to the descriptions of the second inventory request in step 402 in FIG. 4, the second inventory request in step 502 in FIG. 5, the second read request in step 602 in FIG. 6, and the second inventory request in step 702 in FIG. 7. For example, the first request may include the identifier of the target terminal or other information that may be used to identify the target terminal, and may be specifically one or more of the following: the group identifier of the target terminal group, the identification information of the user of the target terminal, or the identification information of the application to which the target terminal belongs.

In other words, the network exposure function network element translates the first information of the target terminal into information used to identify the target terminal, for example, the identifier of the target terminal, so that the tag management function network element can identify the target terminal.

Correspondingly, an embodiment of this application further provides a communication apparatus. The communication apparatus may be the tag management function network element, the TMF, the access network device, the RAN, the access and mobility management function network element, the AMF, the network exposure function network element, or the NEF in the method embodiments in FIG. 4 to FIG. 11, or an apparatus including functions of the tag management function network element, the TMF, the access network device, the RAN, the access and mobility management function network element, the AMF, the network exposure function network element, or the NEF, or a component with functions similar to those of the tag management function network element, the TMF, the access network device, the RAN, the access and mobility management function network element, the AMF, the network exposure function network element, or the NEF. It may be understood that, to implement the foregoing functions, the communication apparatus includes corresponding hardware structures and/or software modules for performing the functions. A person skilled in the art should be easily aware that, with reference to units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

According to the method embodiments in FIG. 4 to FIG. 11, FIG. 12 is a schematic diagram of a communication apparatus according to an embodiment of this application.

The communication apparatus includes a processing module 1201, a receiving module 1202, and a sending module 1203. The processing module 1201 is configured to implement data processing by the communication apparatus. The receiving module 1202 is configured to receive content of the communication apparatus and another unit or network element. The sending module 1203 is configured to send content of the communication apparatus and another unit or network element. It should be understood that the processing module 1201 in this embodiment of this application may be implemented by a processor or a processor-related circuit component (or referred to as a processing circuit), and the receiving module 1202 may be implemented by a receiver or a receiver-related circuit component. The sending module 1203 may be implemented by a transmitter or a transmitter-related circuit component.

For example, the communication apparatus may be a communication apparatus device, or may be a chip applied to the communication apparatus device, or another combined device or component that has functions of the communication apparatus device.

When the communication apparatus is a tag management function network element or a TMF, the sending module 1203 is configured to send a first instruction to an access network device (for example, step 404 in FIG. 4, step 504 to step 505 in FIG. 5, step 604 in FIG. 6, and step 803 in FIG. 8A), where the first instruction includes information about a target terminal, the target terminal includes a first terminal, and the first instruction instructs the access network device to perform a first operation on the target terminal; and the receiving module 1202 is configured to receive a result of the first operation (for example, step 406 in FIG. 4, step 507 and step 508 in FIG. 5, step 613 in FIG. 6, and step 809 in FIG. 8A), where the result of the first operation includes an identifier of the first terminal.

In addition, the foregoing modules may be further configured to support another process of the technology described in this specification. For beneficial effects, refer to the foregoing descriptions. Details are not described herein again.

When the communication apparatus is an access network device or a RAN, the receiving module 1202 is configured to receive a first instruction from a tag management network element, where the first instruction includes information about a target terminal, and the target terminal includes a first terminal (for example, step 404 in FIG. 4, step 504 and step 505 in FIG. 5, and step 604 in FIG. 6); the processing module 1201 is configured to perform a first operation (for example, step 405 in FIG. 4, step 506 in FIG. 5, and step 605 to step 609 in FIG. 6) based on the first instruction; and the sending module 1203 is configured to send a result of the first operation to the tag management function network element, where the result of the first operation includes an identifier of the first terminal (for example, step 406 in FIG. 4, step 507 in FIG. 5, and step 610 in FIG. 6).

In addition, the foregoing modules may be further configured to support another process of the technology described in this specification. For beneficial effects, refer to the foregoing descriptions. Details are not described herein again.

When the communication apparatus is a network exposure function network element or a NEF, the receiving module 1202 is configured to receive a second request (for example, step 401 in FIG. 4, step 501 in FIG. 5, step 601 in FIG. 6, step 701 in FIG. 7, and step 1001 in FIG. 10). The sending module 1203 is configured to send, through the processing module 1201 based on information about a target terminal of a first operation, capability information of an access network device to a tag management function network element (for example, step 402 in FIG. 4, step 502 in FIG. 5, step 602 in FIG. 6, step 702 in FIG. 7, and step 1002 in FIG. 10).

In addition, the foregoing modules may be further configured to support another process of the technology described in this specification. For beneficial effects, refer to the foregoing descriptions. Details are not described herein again.

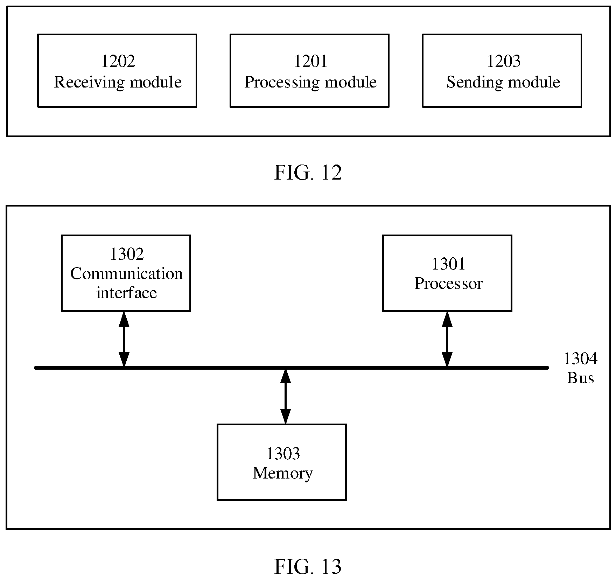

According to the method embodiments in FIG. 4 to FIG. 11, FIG. 13 is a schematic diagram of another communication apparatus according to an embodiment of this application. The communication apparatus includes a processor 1301, a communication interface 1302, and a memory 1303. The processor 1301, the communication interface 1302, and the memory 1303 may be connected to each other through a bus 1304. The bus 1304 may be a peripheral component interconnect (peripheral component interconnect, PCI) bus, an extended industry standard architecture (extended industry standard architecture, EISA) bus, or the like. The bus 1304 may be classified into an address bus, a data bus, a control bus, and the like. For ease of indication, the bus is indicated by using only one line in FIG. 13. However, it does not indicate that there is only one bus or only one type of bus. The processor 1301 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (Generic Array Logic, GAL), or any combination thereof. The memory 1303 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

The processor 1301 is configured to implement a data processing operation of the communication apparatus. The communication interface 1302 is configured to implement a receiving operation and a sending operation of the communication apparatus.

For example, the communication apparatus may be the tag management function network element or the TMF in any one of FIG. 4 to FIG. 11.

When the communication apparatus is a tag management function network element or a TMF, the communication interface 1302 is configured to send a first instruction to an access network device (for example, step 404 in FIG. 4, step 504 to step 505 in FIG. 5, step 604 in FIG. 6, and step 803 in FIG. 8A), where the first instruction includes information about a target terminal, the target terminal includes a first terminal, and the first instruction instructs the access network device to perform a first operation on the target terminal; and the communication interface 1302 is configured to receive a result of the first operation (for example, step 406 in FIG. 4, step 507 and step 508 in FIG. 5, step 613 in FIG. 6, and step 809 in FIG. 8A), where the result of the first operation includes an identifier of the first terminal.

In addition, the foregoing modules may be further configured to support another process of the technology described in this specification. For beneficial effects, refer to the foregoing descriptions. Details are not described herein again.

For example, the communication apparatus may be the access network device or the RAN in any one of FIG. 4 to FIG. 11.

When the communication apparatus is an access network device or a RAN, the communication interface 1302 is configured to receive a first instruction from a tag management network element, where the first instruction includes information about a target terminal, and the target terminal includes a first terminal (for example, step 404 in FIG. 4, step 504 and step 505 in FIG. 5, and step 604 in FIG. 6); the processor 1301 is configured to perform a first operation (for example, step 405 in FIG. 4, step 506 in FIG. 5, and step 605 to step 609 in FIG. 6) based on the first instruction; and the communication interface 1302 is configured to send a result of the first operation to the tag management function network element, where the result of the first operation includes an identifier of the first terminal (for example, step 406 in FIG. 4, step 507 in FIG. 5, and step 610 in FIG. 6).

In addition, the foregoing modules may be further configured to support another process of the technology described in this specification. For beneficial effects, refer to the foregoing descriptions. Details are not described herein again.

For example, the communication apparatus may be the network exposure function network element or the NEF in any one of FIG. 4 to FIG. 11.

When the communication apparatus is a network exposure function network element or a NEF, the communication interface 1302 is configured to receive first information of a target terminal (for example, step 401 in FIG. 4, step 501 in FIG. 5, step 601 in FIG. 6, step 701 in FIG. 7, and step 1101 in FIG. 11). The communication interface 1302 is configured to send, through the processor 1301 based on information about the target terminal, an identifier of the target terminal to a tag management function network element (for example, step 402 in FIG. 4, step 502 in FIG. 5, step 602 in FIG. 6, step 702 in FIG. 7, and step 1102 in FIG. 11).

In addition, the foregoing modules may be further configured to support another process of the technology described in this specification. For beneficial effects, refer to the foregoing descriptions. Details are not described herein again.

An embodiment of this application provides a communication system, including the tag management function network element and the access network device. The tag management function network element performs the method performed by the tag management function network element or the TMF in any one of embodiments shown in FIG. 4 to FIG. 11. The access network device performs the method performed by the access network device or the RAN in any one of embodiments shown in FIG. 4 to FIG. 11.

In a possible implementation, the communication system further includes an access and mobility management function network element. The access and mobility management function network element may perform the method performed by the access and mobility management function network element or the AMF in any one of embodiments shown in FIG. 4 to FIG. 11.

In a possible implementation, the communication system further includes a network exposure function network element. The network exposure function network element may perform the method performed by the network exposure function network element or the NEF in any one of embodiments shown in FIG. 4 to FIG. 11.

An embodiment of this application further provides a computer-readable storage medium. The computer-readable storage medium stores a computer program. When the computer program is executed by a computer, the computer may implement a procedure related to the tag management function network element or the TMF in any one of embodiments shown in FIG. 4 to FIG. 11 provided in the foregoing method embodiments, or the computer may implement a procedure related to the access network device or the RAN in any one of embodiments shown in FIG. 4 to FIG. 11 provided in the foregoing method embodiments, or the computer may implement a procedure related to the access and mobility management function network element or the AMF in any one of embodiments shown in FIG. 4 to FIG. 11 provided in the foregoing method embodiments, or the computer may implement a procedure related to the network exposure function network element or the NEF in any one of embodiments shown in FIG. 4 to FIG. 11 provided in the foregoing method embodiments.

An embodiment of this application further provides a computer program product. The computer program product is configured to store a computer program. When the computer program is executed by a computer, the computer may implement a procedure related to the tag management function network element or the TMF in any one of embodiments shown in FIG. 4 to FIG. 11 provided in the foregoing method embodiments, or the computer may implement a procedure related to the access network device or the RAN in any one of embodiments shown in FIG. 4 to FIG. 11 provided in the foregoing method embodiments, or the computer may implement a procedure related to the access and mobility management function network element or the AMF in any one of embodiments shown in FIG. 4 to FIG. 11 provided in the foregoing method embodiments, or the computer may implement a procedure related to the network exposure function network element or the NEF in any one of embodiments shown in FIG. 4 to FIG. 11 provided in the foregoing method embodiments.

This application further provides a chip, including a processor. The processor is configured to read and run a computer program stored in a memory, to perform corresponding operations and/or procedures performed by the tag management function network element, the TMF, the access network device, the RAN, the access and mobility management function network element, the AMF, the network exposure function network element, or the NEF in the method provided in this application. Optionally, the chip further includes a memory. The memory is connected to the processor through a circuit or a wire. The processor is configured to read and execute a computer program in the memory. Further, optionally, the chip further includes a communication interface. The processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like on the chip. The processor may alternatively be implemented as a processing circuit or a logic circuit.

The foregoing chip may alternatively be replaced with a chip system. Details are not described herein again.

In this application, the terms "include", "contain", and any variant thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following pieces (items)" or a similar expression thereof indicates any combination of these items, including a single item (piece) or any combination of a plurality of items (pieces). For example, at least one piece (item) of a, b, or c may indicate a, b, c, a and b, a and c, b and c, or a, b and c, where a, b, and c may be singular or plural.

The network architecture and the service scenario described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of new service scenarios, the technical solutions provided in embodiments of this application are also applicable to similar technical problems. In embodiments of this application, an example in which a provided method is applied to an NR system or a 5G network is used for description.

A person of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented over some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of embodiments.

Moreover, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Moreover, in the specification, claims, and accompanying drawings of this application, terms "first", "second", and the like are intended to distinguish between different objects but do not indicate a particular order. In addition, the terms "include", "contain" and any variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Although this application is described with reference to specific features and embodiments thereof, it is clear that various modifications and combinations may be made to this application without departing from the spirit and scope of this application. Correspondingly, this specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. This application is intended to cover these modifications and variations of this application provided that these modifications and variations fall within the scope of the claims of this application and equivalent technologies thereof.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, wherein the method comprises:
sending, by a tag management network element, a first instruction to an access network device, wherein the first instruction comprises information about a target terminal, the target terminal comprises a first terminal, and the first instruction instructs the access network device to perform a first operation on the target terminal; and
receiving, by the tag management function network element, a result of the first operation, wherein the result of the first operation comprises an identifier of the first terminal.

2. The method according to claim 1, wherein before the sending, by a tag management network element, a first instruction to an access network device, the method further comprises:
receiving, by the tag management function network element, a first request, wherein the first request comprises first information;
determining, by the tag management function network element, the first operation based on the first request; and
determining, by the tag management function network element, the access network device based on the first information.

3. The method according to claim 2, wherein the first information comprises the information about the target terminal and/or first area information.

4. The method according to claim 3, wherein the first area information comprises at least one of the following: an area identifier, a tracking area identifier, a tracking area list, an identifier of an access and mobility management function network element, an identifier of the access network device, and a cell identity.

5. The method according to any one of claims 1 to 4, wherein the method further comprises:
determining, by the tag management function network element, an access and mobility management function network element corresponding to the access network device; and
the sending, by a tag management network element, a first instruction to an access network device comprises:
sending, by the tag management function network element, the first instruction to the access network device through the access and mobility management function network element corresponding to the access network device.

6. The method according to any one of claims 1 to 5, wherein the first request further comprises an association identifier, and the method further comprises:
sending, by the tag management function network element, the association identifier to the access network device; and
the result of the first operation further comprises the association identifier.

7. The method according to any one of claims 1 to 6, wherein the information about the target terminal comprises at least one of the following: an identifier of the target terminal, a group identifier of a target terminal group, status information of the target terminal, an identifier range of the target terminal, mask information of the target terminal, identification information of a user of the target terminal, or identification information of an application to which the target terminal belongs.

8. The method according to any one of claims 1 to 7, further comprising:
receiving, by the tag management function network element, a second request, wherein the second request is used to request the first operation; and
sending, by the tag management function network element, the received result of the first operation.

9. The method according to any one of claims 1 to 8, further comprising:
receiving, by the tag management function network element, a third request, wherein the third request comprises a second operation;
determining, by the tag management function network element, that there is no access network device configured to perform the second operation; and
sending, by the tag management function network element, a failure response, wherein the failure response indicates that the second operation fails to be performed.

10. The method according to claim 9, wherein the method further comprises:
obtaining, by the tag management function network element, capability information of one or more access network devices, wherein the capability information indicates whether the one or more access network devices are capable of performing the second operation; and
the determining, by the tag management function network element, that there is no access network device configured to perform the second operation comprises:
determining, by the tag management function network element based on the first information and the capability information, that there is no access network device configured to perform the second operation.

11. The method according to any one of claims 1 to 10, wherein the first instruction further comprises first indication information, and the first indication information indicates the access network device to wait for a second instruction of the tag management network element after completing the first operation on the first terminal.

12. The method according to claim 11, further comprising:
sending, by the tag management network element, the second instruction to the access network device, wherein the second instruction instructs the access network device to perform the first operation on the target terminal.

13. The method according to any one of claims 1 to 12, further comprising:
determining, by the tag management function network element, a third operation;
after receiving the result of the first operation performed on a first tag, sending, by the tag management function network element, the third operation to the first terminal through the access network device; and
receiving, by the tag management function network element, a result of the third operation.

14. The method according to claim 13, wherein the result of the third operation comprises at least one of the following: an electronic product code, a cyclic redundancy check, a protocol control code, data field information of the target terminal, and acknowledgment information of the first operation.

15. The method according to any one of claims 1 to 10, wherein the target terminal further comprises a second terminal, and the method further comprises:
the first instruction further comprises second indication information, and the second indication information indicates the access device to perform the first operation on the second terminal after completing the first operation on the first terminal.

16. The method according to any one of claims 1 to 15, further comprising:
receiving, by the tag management function network element, third indication information from the access network device; and
learning, by the tag management function network element based on the third indication information, that the first operation performed by the access network device on the target terminal is completed.

17. The method according to any one of claims 1 to 16, further comprising:
sending, by the tag management function network element, the result of the first operation to a network exposure function network element or an application function network element, wherein the result of the first operation comprises at least one of the following: the electronic product code, the cyclic redundancy check, and the protocol control code.

18. The method according to any one of claims 1 to 17, wherein the first operation comprises at least one of the following: inventory, read, write, kill, lock, blockwrite, blockerase, access, encryption, and decryption.

19. A communication method, wherein the method comprises:
receiving, by an access network device, a first instruction from a tag management network element, wherein the first instruction comprises information about a target terminal, and the target terminal comprises a first terminal;
performing, by the access network device a first operation based on the first instruction; and
sending, by the access network device, a result of the first operation to the tag management function network element, wherein the result of the first operation comprises an identifier of the first terminal.

20. The method according to claim 19, wherein the first instruction further comprises first indication information, and after the performing, by the access network device, a first operation on the first terminal, the method further comprises:
waiting, by the access network device, for a second instruction of the tag management network element based on the first indication information.

21. The method according to claim 20, wherein the target terminal comprises a second terminal, and the method further comprises:
receiving, by the access network device, the second instruction from the tag management network element; and
performing, by the access network device, the first operation on the second terminal based on the second instruction.

22. The method according to claim 19, wherein the first instruction further comprises second indication information, and after the performing, by the access network device, a first operation on the first terminal, the method further comprises:
the target terminal further comprises a second terminal, and the access device performs the first operation on the second terminal based on the second indication information.

23. The method according to claim 22, wherein the result of the first operation comprises an identifier of the second terminal.

24. A communication method, wherein the method comprises:
receiving, by a network exposure function network element, information about a target terminal; and
sending, by the network exposure function network element, an identifier of the target terminal to a tag management function network element based on the information about the target terminal.

25. The method according to claim 24, wherein the information about the target terminal comprises at least one of the following: the identifier of the target terminal, a group identifier of a target terminal group, status information of the target terminal, an identifier range of the target terminal, mask information of the target terminal, identification information of a user of the target terminal, or identification information of an application to which the target terminal belongs.

26. A communication apparatus, comprising a processor, wherein
the processor is configured to read a program from a memory and run the program, to implement the method according to any one of claims 1 to 18, or the method according to any one of claims 19 to 23, or the method according to claim 24 or 25.

27. A communication system, comprising a tag management function network element and an access network device, wherein the tag management function network element performs the method according to any one of claims 1 to 18, and the access network device performs the method according to any one of claims 19 to 23.

28. The system according to claim 24, further comprising a network exposure function network element, wherein the network exposure function network element performs the method according to claim 24 or 25.

29. A computer-readable storage medium, wherein the computer-readable storage medium stores instructions, and when the instructions are run on a computer, a processor is enabled to perform the method according to any one of claims 1 to 18, or the method according to any one of claims 19 to 23, or the method according to claim 24 or 25.

30. A computer program product comprising instructions, wherein when the computer program product is run on a computer, the computer is enabled to perform the method according to any one of claims 1 to 18, or the method according to any one of claims 19 to 23, or the method according to claim 24 or 25.
